(19) Europäisches Patentamt / European Patent Office / Office européen des brevets

(11) **EP 4 231 550 B1**

## (12) EUROPEAN PATENT SPECIFICATION

(45) Date of publication and mention
of the grant of the patent:
**21.05.2025 Bulletin 2025/21**

(21) Application number: **22157267.0**

(22) Date of filing: **17.02.2022**

(51) International Patent Classification (IPC):
**H04B 10/50** *(2013.01)* **H01S 3/00** *(2006.01)*

(52) Cooperative Patent Classification (CPC):
**H04B 10/5057**

(54) **APPARATUS AND METHOD FOR SYNTHESIZING A BROADBAND ELECTROMAGNETIC SIGNAL**

GERÄT UND VERFAHREN ZUR SYNTHESE EINES ELEKTROMAGNETISCHEN BREITBANDSIGNALS

APPAREIL ET PROCÉDÉ DE SYNTHÈSE D'UN SIGNAL ÉLECTROMAGNÉTIQUE À LARGE BANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.08.2023 Bulletin 2023/34**

(73) Proprietor: **Karlsruher Institut für Technologie**
**76131 Karlsruhe (DE)**

(72) Inventors:
• **Koos, Christian**
**74936 Siegelsbach (DE)**
• **Henauer, Thomas**
**76133 Karlsruhe (DE)**
• **Sherifaj, Alban**
**76133 Karlsruhe (DE)**
• **Zwick, Thomas**
**76676 Graben-Neudorf (DE)**

(74) Representative: **Altmann Stößel Dick**
**Patentanwälte PartG mbB**
**Theodor-Heuss-Anlage 2**
**68165 Mannheim (DE)**

(56) References cited:
**WO-A1-2021/173464**

• **GUAN BINBIN ET AL: "Optical Spectrally Sliced Transmitter for High Fidelity and Bandwidth Scalable Waveform Generation", JOURNAL OF LIGHTWAVE TECHNOLOGY, IEEE, USA, vol. 34, no. 2, 15 January 2016 (2016-01-15), pages 737 - 744, XP011598982, ISSN: 0733-8724, [retrieved on 20160212], DOI: 10.1109/JLT.2015.2506559**
• **NICOLAS K FONTAINE ET AL: "Dynamic optical arbitrary waveform generation and detection in InP photonic integrated circuits for Tb/s optical communications", OPTICS COMMUNICATIONS, ELSEVIER, AMSTERDAM, NL, vol. 284, no. 15, 16 March 2011 (2011-03-16), pages 3693 - 3705, XP028220994, ISSN: 0030-4018, [retrieved on 20110326], DOI: 10.1016/J.OPTCOM.2011.03.045**
• **BEN YOO S J ET AL: "Terahertz Information and Signal Processing by RF-Photonics", IEEE TRANSACTIONS ON TERAHERTZ SCIENCE AND TECHNOLOGY, IEEE, PISCATAWAY, NJ, USA, vol. 2, no. 2, 2 March 2012 (2012-03-02), pages 167 - 176, XP011428758, ISSN: 2156-342X, DOI: 10.1109/TTHZ.2012.2185720**

EP 4 231 550 B1

## Description

Field of the invention

The invention is in the field of photonics and microwave engineering. It concerns an apparatus, a system, a method, and a computer program for synthesizing at least one broadband electromagnetic signal. In particular, the at least one targeted broadband electromagnetic signal may be a broadband arbitrary electromagnetic signal, wherein the term "arbitrary signal" refers to a signal that can be freely defined, e.g., by digital signal processing, within the bandwidth offered by a signal generator system without being required to change any hardware configuration.

Related art

A plurality of previous work in the field of optical arbitrary waveform generation (OAWG) is known.

In Geisler et al., Demonstration of a Flexible Bandwidth Optical Transmitter/Receiver System Scalable to Terahertz Bandwidths, IEEE Photonics Journal 3(6), 2011, pp. 1013-1022, it is speculated that an OAWG scheme can be pushed up to bandwidths of terahertz, while typical experimental applications using discrete components are limited to bandwidths of less than 100 GHz, see e.g. Guan, B., et al., Optical Spectrally Sliced Transmitter for High Fidelity and Bandwidth Scalable Waveform Generation, Journal of Lightwave Technology 34(2), 2016, pp. 737-744.

The implementation of OAWG schemes using discrete components as described in Geisler et al., see above, may vary, however, they typically suffer from effects of random amplitude and/or phase fluctuations between tributary electromagnetic signals. When unmonitored and uncontrolled, these random fluctuations can distort the synthesizing of the desired signal resulting in a low-quality output. In particular, the OAWG scheme described in Geisler et al. see above, is based on a wavelength division multiplexing (WDM) transmitter, wherein a multitude of tributary optical signals with overlapping frequency components are generated and later combined into a broadband optical output signal using an optical multiplexer.

Fiber-based devices were used, wherein slowly varying phase shifts between the tributary electromagnetic signals are unavoidable due to thermal/and or mechanical influences from the environment. Although it is stated in Geisler et al., see above, that the phase between each spectral slice requires alignment for a correct generation of the desired waveforms, no attempt is made, to monitor or adjust the phase between the tributary electromagnetic signals.

Feng et al., Rapidly reconfigurable high-fidelity optical arbitrary waveform generation in heterogeneous photonic integrated circuits, Optics Express 8884, Vol. 25(8), 2017, describes an example of an OAWG implemented on a multi-chip photonic module. Herein, the authors declare that they have successfully generated a waveform that spans 160 GHz of spectral bandwidth. However, the waveform in question is not truly arbitrary and cannot span a continuous spectrum over 160 GHz with a well-defined phase. The scheme used herein is the same as described in Geisler et al., see above, implemented on a multi-chip module. An array of phase modulators implemented in InP technology is combined with two arrayed waveguide gratings implemented on $Si_3N_4$ chips. Since pure phase modulation is used instead of IQ modulation, the waveform generated by this scheme cannot be truly arbitrary, as one cannot adjust simultaneously the amplitude and phase of the waveform. The spectrally adjacent signals generated by the modulators can overlap with each other but the resulting superposition cannot form a well-defined time-domain waveform, since neither the relative amplitude nor the relative phase of the superimposed tributary electromagnetic signals can be effectively controlled to compensate for random phase shifts in the underlying photonic circuits.

To synthesize an ultra-broadband optical signal starting from at least two band-limited tributary electromagnetic signals requires precise knowledge of the relative amplitude and/or phase, with which the tributary electromagnetic signals are superimposed. The main limitation of using state-of-the-art OAWGs, and in particular OAWGs like the one mentioned in the previous paragraph, is that they do not allow for monitoring and subsequent control of a stable amplitude and/or phase relationship between the tributary electromagnetic signals that are combined in order to generate the broadband output signal. Without any form of a feedback signal configured to track a relationship between the tributary electromagnetic signals, generating specific time-domain output waveforms with a well-defined spectral phase across the entire bandwidth in the THz range in a reliable fashion is not possible.

In general, the phase of tributary electromagnetic signals can be impacted by environmental influences, such as thermal fluctuations and/or minute changes of mechanical strain. However, other kinds of influences on the phase of the tributary optical signals may also be possible. As a consequence of phase and/or amplitude variations, a resulting superimposed waveform can be subject to time-varying and at least partially random impairments. In an extreme case in which any of the tributary electromagnetic signals propagates through at least one optical fiber or waveguide before superposition with another signal, the phase variations can be of the order of or even exceed $2\pi$ radian such that a resulting broadband signal would be largely random, wherein providing a well-defined waveform would not be possible. Apart from phase variations, the tributary optical signals can also be subject to amplitude variations which may also impede the synthesis of a well-defined target waveform by simple superposition.

Problem to be solved

It is an objective of the present invention to provide an apparatus, a system, a method, and a computer program for synthesizing at least one broadband electromagnetic signal, which at least partially overcomes the above-mentioned problems of the state of the art.

In particular, it would be desirable to provide an apparatus, a system, a method, and a computer program which allows superimposing tributary electromagnetic signals having a correct relationship between their amplitudes and/or their phases to form a well-defined broadband waveform. More particularly, it would be desirable by using the apparatus, the system, the method, and the computer program to establish and maintain the correct relationship between the amplitudes and/or the phases even during operation by monitoring and adjusting adjacent or overlapping tributary electromagnetic signals in a continuous fashion to enforce corresponding operating conditions over a useful time interval despite various adverse factors, such as manufacturing tolerances or environmental influences.

Summary of the invention

This problem is solved by an apparatus, a system, a method, and a computer program for synthesizing at least one targeted broadband electromagnetic signal having the features of the independent claims. Preferred embodiments, implemented in an isolated fashion or in any arbitrary combination, are listed in the dependent claims and throughout the specification.

In a first aspect, the present invention relates to an apparatus for synthesizing at least one broadband electromagnetic signal, in particular at least one arbitrary electromagnetic signal. As used herein, the terms "arbitrary signal" or "arbitrary waveform" refer to an electromagnetic signal or to a waveform of an electromagnetic signal, respectively, which can be freely defined, specifically by digital signal processing, having a bandwidth offered by at least one electromagnetic signal generator, without being required to alter a hardware configuration during operation.

According to the present invention, the apparatus comprises

- at least two electromagnetic signal generators, wherein the electromagnetic signal generators are configured to provide at least two tributary electromagnetic signals having spectra that overlap at least partially;
- at least one signal-combining element, wherein the at least one signal-combining element is configured to merge the at least two tributary electromagnetic signals into at least one combined electromagnetic signal;
- at least one signal-detecting element, wherein the at least one signal-detecting element is configured to generate at least one detection output signal by detecting at least a portion of at least one of the at least one combined electromagnetic signal;
- at least one controlling element, wherein the at least one controlling element is configured to extract signal information about at least one of a relative amplitude or a relative phase with which the at least two tributary electromagnetic signals are merged into the at least one combined electromagnetic signal from the at least one detection output signal;
- at least one actuating element, wherein the at least one actuating element is configured to modify at least one of the amplitude or the phase of at least one of the at least two tributary electromagnetic signals based on the signal information,

wherein modifying the at least one of the amplitude or the phase of the at least one of the at least two tributary electromagnetic signals is performed in a manner that at least one of the at least one combined electromagnetic signal corresponds to the at least one targeted broadband electromagnetic signal.

As used herein, the terms "relative amplitude" and "relative phase" or any grammatical variation thereof refer to an amplitude relationship or a phase relationship, respectively, with which two of the tributary electromagnetic signals are superimposed to generate the at least one targeted broadband electromagnetic waveform. In a preferred embodiment, a time-domain signal can be described by a complex-valued Fourier transform, which is characterized by a frequency-dependent spectral amplitude and a frequency-dependent spectral phase. The amplitude or phase relationship of two signals can, subsequently, be defined by a relationship of complex-valued spectral components of the two signals at distinct frequencies, in particular via a difference, or a ratio; however a further kind of relationship may also be feasible. By way of example, this relationship can be determined for complex-valued spectral components of the two signals that occur at a common frequency within a spectral overlap region of the two signals. In a further embodiment, the relationship can be more general and may also depend on a frequency. Specifically, frequency-dependent spectral phases can be used to express relative temporal delays of two tributary signals in the time domain, which may be compensated by the actuating element. In an alternative embodiment, the time-domain signal can be described by a corresponding complex-valued analytic signal, which can be expressed by a complex-valued continuous-wave carrier that is modulated, or multiplied, with a time-dependent complex-valued envelope. The amplitude or phase relationships of two signals can, subsequently, be defined by expressing both the signals with respect to the same wave and by comparing the phases and amplitudes of the complex-valued envelope at distinct times or frequencies. This approach is described below in more detail.

According to the present invention, the at least one targeted broadband electromagnetic signal is synthesized using a superposition of at least two different tributary electromagnetic signals. As generally used, the term "targeted" refers to at least one desired electromagnetic signal that is to be generated by using at least one of the apparatus, the system, the method, or the computer program for synthesizing at least one targeted broadband electromagnetic signal according to the present invention. Accordingly, the at least one targeted broadband electromagnetic signal corresponds to the combined electromagnetic signal as generated by the at least one signal-combining element in an event in which the at least one actuating element is triggered by the at least one controlling element to modify the at least one of the amplitude or the phase of at least one of the at least two tributary electromagnetic signals based on the at least one detection output signal prior to entering the at least one signal-combining element in a manner that a deviation between the at least one targeted broadband electromagnetic signal and the combined electromagnetic signal can be maintained below a defined threshold.

In particular, the purpose of superimposing tributary electromagnetic signals can comprise increasing a bandwidth of a continuous arbitrary signal, even when using band-limited or non-arbitrary electromagnetic signal generators, thereby being able to obtain truly arbitrary signals having bandwidths in the GHz range, preferably in the THz range. As generally used, the terms "THz frequency" and "THz range" refer to frequencies or bandwidths, respectively, which exceed 100 GHz, while the terms "THz signal" or "THz waveform" relate to an electromagnetic signal or to a form of the electromagnetic signal, respectively, having a bandwidth in the THz range. The terms "arbitrary waveform" or "arbitrary signal" refer to an electromagnetic waveform having an arbitrary time-dependent or, equivalently, an arbitrary frequency-dependence of the complex-valued signal spectrum, which may, preferably, be obtained by using a Fourier transformation. Specifically, the spectrum of an arbitrary signal shall not be subject to uncontrolled discontinuities in the frequency-dependent phase and amplitude, which may, for example, occur as a consequence of spectral stitching of band-limited tributaries with uncontrolled or poorly controlled relative phases and/or amplitudes.

For a purpose of synthesizing the at least one targeted broadband electromagnetic signal by the superposition of the at least two tributary electromagnetic signals according to the present invention, at least one relationship between at least one amplitude and at least one phase of the at least two tributary electromagnetic signals is known for at least one point in time of the superposition. In general, errors of the properties of the at least two tributary electromagnetic signals at the superposition can lead to significant impairments of the waveform of the at least one synthesized broadband electromagnetic signal or impede the synthesizing of the targeted waveform. Establishing and maintaining the at least one relationship between the at least one amplitude and the at least one phase of the at least two tributary electromagnetic signals phase during the superposition of the at least two tributary electromagnetic signals is challenging, in particular when carrier frequencies as used for the at least two tributary electromagnetic signals are high, in particular in an optical frequency range, since optical signals are particularly prone to unwanted phase drifts and amplitude changes when propagating in waveguides. As used herein, the terms "optical" and "optical frequency range" refer to electromagnetic signals whose wavelength spectrum covers the optically visible range (wavelengths $400 \, nm \leq \lambda < 800 \, nm$) and, in addition, any type of electromagnetic waves that can be guided in waveguides, preferably, the UV range ($10 \, nm \leq \lambda < 400 \, nm$), the infrared range ($800 \, nm \leq \lambda < 1 \, mm$), the THz and millimeter-wave range ($30 \, \mu m \leq \lambda \leq 3 \, mm$). Preferably, each of the at least two tributary electromagnetic signals and the at least one targeted broadband electromagnetic signal may have a wavelength in the optical frequency range, more preferred of 10 nm to 3 mm, in particular of 100 nm to 1 mm.

The signal portion detected by the detection unit can be derived from any of the at least one combined electromagnetic signals. Specifically, the detected signal portion can be derived from the combined electromagnetic signal that corresponds to the targeted broadband electromagnetic signal, or from any other combined electromagnetic signal at any of the at least one output of the combiner unit. In a special embodiment, the combined electromagnetic signal, from which the detection output signal is derived, and/or the detection output signal itself may be much more narrowband than the targeted broadband electromagnetic signal. This is, e.g., the case if the transmission characteristics of the signal combination unit are strongly frequency dependent - the detection output signal may then be derived from a spectral portion of a combined electromagnetic signal that only contains parts of the overlap region of two tributary electromagnetic signals. This may alternatively occur if the detection element may be configured in a manner that the detection output signal may be generated only by a small portion of the combined electromagnetic signal, while irrelevant portions of the combined electromagnetic signal are not translated to the detection output, preferably by using balanced photodetectors for optical signals.

The invention as presented herein may particularly be useful for the synthesis of spectrally broadband waveforms. The bandwidth of the targeted electromagnetic signal may, thus, preferably, exceed 20 GHz, 40 GHz, 75 GHz, 150 GHz, 200 GHz, or 300 GHz. Similarly, the bandwidth of each tributary electromagnetic signal may, preferably, be between 1 GHz and 500 GHz, more preferred between 10 GHz and 200 GHz, most preferred between 20 GHz and 150 GHz. The number of tributary electromagnetic signals that are merged into the targeted broadband electromagnetic signal may, preferably, be equal to or larger than 2, more preferably equal to or larger than 4, most preferably equal to or larger than 8. For an embodiment based on spectrally sliced tributary electromagnetic signals, the bandwidth of the portion of the combined electromagnetic signal which may be used for generating the detection output signal may, preferably, be less than 50%, more preferably less than 30%, most preferably less than 10%, of the bandwidth of a spectral slice. In absolute terms, for an embodiment based on spectrally sliced tributary electromagnetic signals, the bandwidth of the portion of the combined electromagnetic signal which is used for generating the detection output signal may, preferably, be between 1 MHz and 50 GHz, more preferably between 100 MHz and 20 GHz, most preferably between 1 GHz and 20 GHz, in particular between 2 GHz and 10 GHz. In a further embodiment in which the targeted electromagnetic signal may not be generated by spectral slicing but by superimposing two or more broadband tributary electromagnetic signals, the bandwidth of the portion of the combined electromagnetic signal, which may be used for generating the detection output signal, may be comparable to the bandwidth of the targeted electromagnetic signal. Irrespective of the embodiment, the power of the portion of the tributary electromagnetic signal that may, particularly, be used for generating the detection output signal, may, preferably, be between 10 dB and 60 dB, more preferably between 15 dB and 40 dB, most preferably between 20 dB and 30 dB, lower than the overall power of the respective tributary electromagnetic signal. In general, an actuation bandwidth of a drive signal being configured for driving the at least one actuating element may, preferably, exceed 1 kHz, 10 kHz, 100 kHz, 1 MHz, or 10 MHz, wherein the actuating elements may, preferably, be configured to support the selected actuation bandwidth.

In a preferred embodiment, the overlapping portion of the spectrum of the at least two tributary electromagnetic signals may comprise at least one reference signal which may be suppressed in the at least one targeted broadband electromagnetic signal upon the combination of the tributary electromagnetic signals in the signal-combining element. Due to inaccuracies and tolerances of the elements as used in the apparatus, this suppression can be incomplete, thus leading to a residual reference signal in the combined broadband electromagnetic signal. Preferably, the power level of the residual reference signal may, preferably, be 10 dB, 20 dB, 30 dB, 40 dB or 50 dB, lower than the overall power of the combined electromagnetic signal.

To correctly combine the tributary electromagnetic signals and to maintain a high quality of the generated broadband electromagnetic waveform, an undesired time-varying and at least partially random amplitude and/or phase offsets are compensated according to the present invention by using a feedback control loop. As used herein, the terms "amplitude offset" and "phase offset" or any grammatical variation thereof refers to an unintended or random amplitude or phase difference, respectively, between two of the tributary electromagnetic signals which prevents their combination in the combiner unit to generate the targeted output signal at the intended output port. The feedback signal of the feedback loop is derived by detecting at least one of the combined signal outputs in the at least one signal-combining element. Information about at least one relative amplitude and/or at least one relative phase, with which the tributary electromagnetic signals are superimposed to form the at least one combined electromagnetic signal, is extracted by detecting the at least one combined electromagnetic signal, specifically at least a portion of at least one of the combined electromagnetic signals. Herein, extraction of the signal information is based on characteristics of the tributary electromagnetic signals, characteristics of the at least one signal-combining element, and characteristics of the at least one signal-detecting element. By using the extracted signal information, the at least one controlling element may establish a real-time feedback control loop in order to modify the amplitude and/or the phase of at least one of the tributary electromagnetic signals. As used herein, the terms "real-time" or "real-time feedback loop" refer to an operation of the apparatus designed for providing a response within a specified time being short enough to maintain a predefined relationship between the relative amplitude and/or phase with which the two tributary electromagnetic signals are combined to form the at least one combined electromagnetic signal. The response times may, preferably, be more than a factor of 2, more preferred more than a factor of 5, most preferred more than a factor of 10, smaller than the time scales related to the distortions that lead to phase and/or amplitude errors of the tributary electromagnetic signals. For digital signal processors based on field-programmable gate arrays (FPGA) response times are typically in the range between 100 ns and 100 μs. Shorter response times may be achieved by using application-specific integrated circuits (ASIC). As described below in more detail, at least one actuating element is used for modifying the amplitude and/or the phase of at least one of the at least two tributary electromagnetic signals.

As mentioned above, the apparatus for synthesizing the at least one targeted broadband electromagnetic signal according to the present invention comprises at least two electromagnetic signal generators. As used herein, the term "electromagnetic signal generator" refers to a device which is configured to generate and provide at least one tributary electromagnetic signal. As further used herein, the term "tributary electromagnetic signal" refers to an initial electromagnetic signal, which may be in the optical frequency range and which is provided as an input signal for further processing by the present apparatus. Further, the at least two electromagnetic signal generators are selected and operated in a fashion that the resulting two or more tributary electromagnetic signals have spectra that overlap at least partially.

As generally used, the term "spectrum" refers to a spectral range which is covered by a corresponding electromagnetic signal. As used herein, the term "spectral overlap" refers to an observation that spectral ranges of two or more individual tributary electromagnetic signals are not disjoint but have a common overlap range which is comprised by the spectral ranges of at least two of the individual tributary electromagnetic signals. In general, the spectral overlap can be extremely small and only facilitate a detectable signal for the extraction of the signal information about the relative amplitude and/or the relative phase of the two or more individual tributary electromagnetic signals. As an alternative, the spectral overlap can be substantial in a fashion that the common overlap range covers at least a significant portion of the spectra of at least two of the individual tributary electromagnetic signals, which interfere in the full overlap range to generate the at least one broadband electromagnetic signal. As a further alternative, the tributary electromagnetic signals can entirely overlap. The superposition of the at least two tributary electromagnetic signals can be used to generate a fully arbitrary signal as long as the conditions with regard to the amplitude and/or the phase of the superposition are met in the at least one signal-combining element.

In general, the at least two electromagnetic signal generators can be implemented in various manners. In a preferred embodiment especially related to signal generation in the optical frequency range, at least one electro-optic modulator can be used, preferably implemented as discrete fiber-based component or as an integrated optical component being part of a more complex photonic integrated circuit (PIC). In particular, the at least one electro-optic modulator may rely on a technology which can be selected from at least one of a second-order-nonlinear organic or inorganic material, such as $LiNbO_3$, or $BaTiO_3$, or from InP, GaAs, silicon photonics, organic materials, silicon-organic hybrid (SOH), or a plasmonic-organic hybrid (POH). Specifically, a phase modulator, a Mach-Zehnder modulator, or an IQ modulator can be used, which may be fed by at least one common optical signal generator such as a laser source or a frequency-comb generator. The electromagnetic signal generator may, further, comprise an electrical signal generator which can be configured to generate an electrical radio frequency (RF) drive signal that may be modulated onto an optical waveform, preferably an optical carrier signal, by using one of the aforementioned devices. The electrical signal generator could be implemented by using an RF signal generator or an electronic digital-to-analog converter (DAC). However, further kinds of electromagnetic signal generators may also be feasible.

For providing an optical signal that may be used to drive the optical devices comprised by the electromagnetic signal generator, the optical signal generator can, especially, comprise a light source selected from a separate continuous wave (cw) laser source, an optical frequency comb generator, preferably in combination with at least one optical filter to select a particular optical tone. The optical frequency comb generator may, preferably, be based on a mode-locked laser diode, a quantum-dash laser, a quantum-dot laser, a microresonator having second- and/or third-order optical nonlinearities, an electro-optic modulator, a highly nonlinear optical fiber, an integrated waveguide having second- and/or third-order optical nonlinearities, or a combination thereof. As an alternative, the desired electromagnetic tributary electromagnetic signals may be generated by directly modulating the light source. Further kind of light sources and optical or electromagnetic signal generators may also be conceivable.

In a particular embodiment, specific characteristics of the electromagnetic signal generators and the associated signal chain can be considered and compensated for, specifically, by pre-distorting the electrical RF drive signals through digital or analogue signal processing techniques. Specifically, a pre-distortion can be configured for accounting for characteristics of the electromagnetic signal generator, such as emission powers or pulse shapes, or for frequency-dependent transfer functions of the RF signal generators or other RF components, of the modulators, of the transmission fibers, and/or the at least one signal-combining element, thereby guaranteeing that the at least one combined electromagnetic signal corresponds to the at least one targeted broadband electromagnetic signal. The pre-distortion may, further, compensate for nonlinear impairments of the signal processing chain, such as a specific transfer function of the electro-optic modulator.

Further, the apparatus for synthesizing the at least one targeted broadband electromagnetic signal according to the present invention comprises at least one signal-combining element. As used herein, the term "signal-combining element" refers to a device which is configured to merge the at least two tributary electromagnetic signals into at least one combined electromagnetic signal. As further used herein, the term "merging" or any grammatical variation thereof refers to assembling the at least two tributary electromagnetic signals, especially by superposition, as facilitated by using the at least one signal-combining element, whereby the at least one combined electromagnetic signal is obtained. For this purpose, the signal-combining element can have selected transfer properties configured to support achieving and maintaining desired properties of the amplitude and/or the phase of the tributary electromagnetic signals at the at least one output port of the at least one signal-combining element.

The at least one signal-combining element can be based on a wide range of technical concepts. A coupling between the at least two input ports of the waveguide coupler and at least one output port can be embodied by any structure that is configured for input signals to be split and/or combined in a predictable manner. In a preferred embodiment, the at least one signal-combining element does not exhibit any strongly frequency-selective transfer characteristics in the bandwidth of the at least two tributary electromagnetic signals. Herein, the term "not strongly frequency-selective" refers to a signal-combining element, such as a directional coupler, a beam splitter, or a multi-mode interference coupler (MMI), that are not specifically designed to exhibit frequency-dependent transfer characteristics, but that may still be subject to unavoidable frequency-dependent variations of the coupling ratios. In such an embodiment, the transfer function between any pair of input port and output port may, preferably, vary by less than 6 dB, more preferably by less than 3 dB, most preferably by less than 1 dB, across the frequency range covered by the tributary electromagnetic signal at the respective input port. In an alternative embodiment, a signal-combining element having strongly frequency-selective transfer characteristics can be used, wherein each input port may have a purposefully designed band-limited frequency response to at least one of the output ports with bandwidths that are comparable to or slightly larger than the tributary electromagnetic signal which is fed into the corresponding input port. Examples of such embodiments include optical filters, e.g., based on gratings, thin-films, waveguide-based devices such as arrayed-waveguide gratings, waveguide-based resonators or interferometers, or other integrated optical circuits. In such an embodiment, the transfer function between at least one input port and one output port, preferably, varies by more than 10 dB, more preferably by more than 15 dB, most preferably by more than 20 dB, across the frequency range covered by the targeted electromagnetic signal.

In a preferred embodiment, the at least one signal-combining element may have at least one first output port and at least one second output port. Herein, the at least one targeted broadband electromagnetic signal may, preferably, be provided at the at least one first output port, while the at least one signal-detecting element may, preferably, be connected to at least one second output port.

In a further preferred embodiment, the at least one signal-combining element may comprise photonic integrated circuits (PIC). The photonic integrated circuits may be based on glass-based waveguide structures, silicon photonic waveguide structures, silicon nitride-based waveguide structures, waveguide structures based on III-V compound semiconductors, such as InP, GaAs, InGaAsP or other binary, ternary, or quaternary compounds, or waveguides based on any other materials with sufficiently low losses.

In a further preferred embodiment, the at least one signal-combining element may comprise a multi-mode interference coupler (MMI). As generally used, the terms "multi-mode interference coupler" or "MMI" refer to a broad multimode waveguide connected to several narrower, typically single-mode, input and output waveguides. As a result, the MMI acts as a power splitter element and operates based on a principle of self-imaging. The MMI is, therefore, typically used for splitting or combining optical signals with precisely defined phase and amplitude relations. Alternatively, or in addition, the at least one signal-combining element can comprise a network of directional couplers or a network of MMI couplers.

In a further preferred embodiment, the at least one signal-combining element comprises a directional coupler or a network thereof. An example of such an embodiment is a so-called "90° optical hybrid", which can be used as the at least one signal-combining element or as part thereof. The at least one signal-combining element may, alternatively or additionally, comprise waveguide-based Y-junctions.

As a further alternative or in addition, the at least one signal-combining element may comprise a broadband signal-combining element which is not based on waveguides, such as an optical free-space beam splitter or a grating. The beam splitter may, in particular, be selected from at least one of a pellicle beam splitter, a beam-splitter cube, or a partially transmitting mirror or thin-film filter.

As a further alternative or in addition, the at least one signal-combining element may comprise an arrayed waveguide grating, a network of delay interferometers, one or more ring resonators, a coupled-resonator optical waveguide (CROW) filter, optical lattice filters, discrete thin-film filters, prisms, or gratings. Herein, each input port may feature a strongly frequency-selective, e.g., band-limited transfer function to at least one common output port, having a bandwidth comparable to or larger than that of the tributary electromagnetic signal which is fed into the respective input port, wherein the transfer functions of all input ports to at least one output port may, ideally, add up to an essentially flat transmission.

As particularly preferred, the excess loss of the at least one signal-combining element is kept low. In this context, the term "excess loss" quantifies the share of power that is lost within the device, i.e., the difference between the power fed into a particular input port of the device and the sum of the powers measured at all output ports. Typically, the excess loss is expressed as a ratio of the power loss to the input power and quantified in decibels (dB). For signal-combining elements that do not exhibit any strongly frequency-selective transfer characteristics, e.g., MMI or directional couplers, the excess loss is preferably below 3 dB, more preferably below 2 dB, most preferably below 1 or 0.5 dB. For implementing signal-combining element that do exhibit strongly frequency-selective transfer characteristics, e.g., AWG or other filters, the excess loss is preferably below 6 dB, more preferably below 3 dB, most preferably below 2 dB, in particular below 1 dB. In a preferred embodiment, the power transfer functions between the input ports and any of the output ports may differ widely, where, for a give frequency, the output port with the highest power transfer factor is used to generate the at least one targeted broadband electromagnetic waveform, whereas the output ports with the lower power transfer function are used to extract information about the relative amplitude and/or the relative phase of the at least two combined tributary electromagnetic signals. However, further kinds of signal-combining elements may also be feasible.

In a further embodiment, the tributary electromagnetic signals may be pre-conditioned in a fashion to provide augmented monitoring information on at least one output signal of the at least one signal-combining element which can, particularly, be dedicated to monitoring the tributary electromagnetic signal superposition in the signal-combining element. The pre-conditioning of the tributary electromagnetic signals may comprise adding auxiliary signal components, such as time-harmonic pilot tones, that provide the desired augmented monitoring information in the at least one output signal, while not distorting the targeted electromagnetic waveform to a relevant degree. Adding of auxiliary signals, such as pilot tones, can be useful in case any of the one targeted broadband electromagnetic signal features no or only very weak signal components in the spectral overlap region between at least two tributary electromagnetic signals. In this embodiment, interference signals between spectrally overlapping signal components would be absent or too weak to detect, unless the spectral overlap region is filled with auxiliary signals. In a preferred embodiment, these auxiliary signal components do not impair the generated targeted broadband electromagnetic signal due to destructive interference at the corresponding output port of the at least one signal-combining element.

Further, the apparatus for synthesizing the at least one targeted broadband electromagnetic signal according to the present invention comprises at least one signal-detecting element. As used herein, the term "signal-detecting element" refers to a device which is configured to generate at least one detection output signal by detecting at least a portion of at least one of the combined electromagnetic signals. For this purpose, at least a portion of at least one combined electromagnetic signals may be provided by or tapped from any output port of the at least one signal-combining element. As further used herein, the term "detection output signal" refers to an electromagnetic signal which is based on the at least one combined electromagnetic signal as the input signal, wherein at least one feature of the detection output signal depends on at least one feature of the superposition of the tributary electromagnetic signals in the signal-combining element. Specifically by analyzing the at least one detection output signal and/or by extracting certain features thereof, the apparatus can be configured to extract information about the relative amplitude and/or phase with which the at least two tributary electromagnetic signals are superimposed in the signal-combining element and later use this information to automatically and autonomously counteract undesired deviations. As indicated above, the at least one detection output signal may, in particular, be generated by using the at least one signal-detecting element in such a fashion that it may detect at least a portion of at least one of the combined electromagnetic signals as provided by at least one output port of the at least one signal-combining element.

In a particular embodiment, multiple output ports of the at least one signal-combining element can have different input-to-output transfer functions, which may allow the tributary electromagnetic signals to be modified in a manner that the at least one targeted arbitrary electromagnetic waveform is provided at at least one use-signal output port, while additional signals or components thereof are provided at at least one monitor-signal other output ports. Based on the knowledge of the various input-to-output transfer functions, the monitor signals or signal components can be exploited to extract the desired information about the relative amplitude and/or relative phase with which the at least two tributary electromagnetic signals are superimposed to form the at least one targeted electromagnetic waveform at the use-signal output. This concept may, particularly, be useful to establish robust feedback circuits that can rely on strong indicative features that sensitively rely on the relative amplitude and/or relative phase of the tributary electromagnetic signals and that are comprised by the at least one monitoring signal, while the targeted waveform at the at least one use-signal output port is rather insensitive to small deviations of the amplitude and/or phase from the targeted relation. In a preferred embodiment, the tributary electromagnetic signals or components thereof can be brought to constructive or destructive interference of certain signal components at at least one of the at least one use-signal output port, while the same or other signal components are subject to partial interference at at least one of the at least one monitor-signal components. This feature may be used in combination with the above-mentioned pre-conditioning of the tributary electromagnetic signals as to provide augmented monitoring information in at least one output signal. Specifically, the pre-conditioning of the tributary electromagnetic signals may comprise adding auxiliary signal components, such as time-harmonic pilot tones, which are eliminated by destructive interference in the targeted broadband electromagnetic signal provided at a first output port of the signal-combining element, while the desired augmented monitoring information is obtained by constructive, destructive, or partial interference of the auxiliary signals in at least one second output port of the signal-combining element. As used herein, the terms "constructive interference" or "destructive interference" refer to a superposition of two signals or signal components having a phase difference close to 0 or $\pi$, while the phase difference for partial interference is not close to 0 or $\pi$. The term "close to" is used to describe a deviation of preferably less than $\pi/3$, more preferably less than $\pi/4$ or $\pi/5$, most preferably less then $\pi/10$, in particular less than $\pi/20$. This embodiment may, preferably, be implemented using direction couplers or MMI couplers having well-known or pre-characterized phase relationships between the various input ports and output ports.

In a particular embodiment, the at least one signal-combining element may be an MMI or an optical 90° hybrid. In this embodiment, the tributary electromagnetic signals can be generated in such a manner that their combination at one of the output ports of the at least one signal-combining element may be equal to the target broadband electromagnetic signal, but at least one combined signal at another output port of the at least one signal-combining element after it may be detected may be approximated by a relation that is proportional to an amplitude offset and/or a phase offset between the at least two tributary electromagnetic signals.

In a further embodiment, the at least two tributary electromagnetic signals may be engineered starting from the spectrum of the at least one targeted broadband electromagnetic signal and filtering it into different band-limited spectral regions. Herein, each tributary electromagnetic signal may only have a portion of the total targeted signal frequency content and, when added together, the at least two tributary electromagnetic signals can reconstitute the at least one targeted broadband electromagnetic signal. To detect the amplitude offset and/or phase offset between the at least two tributary electromagnetic signal, auxiliary signal components, such as pilot frequency tones, can be added to one or more of the at least two tributary electromagnetic signals in the spectral overlap range of the at least two electro-magnetic signals. In a preferred embodiment, the tones may be chosen in a manner that they cancel out due to destructive interference in the targeted electromagnetic signal, but generate a combined signal being indicative of the amplitude relationship and/or the phase relationship between the at least two tributary electromagnetic signals at another output port of the signal-combining element.

In a preferred embodiment, at least one of a single-ended photodetector (PD) or a balanced photodetector (BPD) may be used for detecting at least a portion of at least one combined signal at at least one the output ports of the at least one signal-combining element, specifically by using the quadratic detection characteristics of the PD and/or the BPD. In a possible embodiment, a single-ended photodiode may be used for the purposes of photodetection, acting as a PD. As typically used, the term "single-ended photodiode" refers to a semiconductor device having a p-n junction which can generate an electrical RF signal proportional to the power of an impinging optical signal. In optical communications single-ended photodiodes have a slightly adjusted p-i-n structure, wherein an intrinsic semiconductor material is inserted between two doped semiconductor layers. In contrast to the single-ended diode, a BPD comprises two photodiodes connected in series, wherein the photodiodes are oriented in such a manner that, under illumination by an optical signal, a difference current is generated using the difference between the photocurrents as generated by each diode. A BPD is "properly balanced" when the two photocurrents cancel each other exactly and the difference current is zero under the same incident optical signal impinging on both photodiodes. For any photodiode, the generated photocurrent is proportional to instantaneous power and, hence, to the square of the electric or magnetic field amplitude of the optical signal. Due to this quadratic detection characteristics, using a single-ended diode to directly detect the photo-mixing product of at least two tributary electromagnetic signals results in an RF signal which comprises signal-signal mixing terms, which makes extracting the desired signal information of the relative amplitude and/or phase of the tributary electromagnetic signals more difficult. Using a BPD can make extracting the relative amplitude offset and/or phase offset information between tributary electromagnetic signals easier, since signal-signal beating terms are eliminated or strongly suppressed in the RF detection signal. In addition, using BPD in combination with properly engineered tributary electromagnetic signals allows to considerably simplify the information-extracting process by directly providing an output signal that may, approximately, be proportional to the phase error with which the tributary electromagnetic signals are superimposed in the signal-combining element to form the one targeted broadband electromagnetic signals.

In a further embodiment, at least one conversion element such as an ultra-broadband photodetector can be used for converting at least a portion of the at least one combined electromagnetic waveform at the at least one output port of the at least one signal-combining element, in particular, to translate at least a portion of a generated optical waveform into an ultra-broadband converted electromagnetic waveform having a different center frequency that may, e.g., be in den mm-wave or THz frequency range. As used herein, the term "ultra-broadband photodetector" refers to a photodetector which is configured to can generate a broadband electrical signal from an associated optical signal. The electro-optic bandwidth of the ultra-broadband photodetector preferably exceeds 20 GHz, 50 GHz, 100 GHz, 200 GHz, or 300 GHz. The ultra-broadband photodetector may rely on high-speed photodiodes, in particular conventional *p-i-n* photodiodes, triple-transit-region photodiodes (TTR-PD), and/or uni-traveling carrier (UTC) photodiodes, or on other optical signal-detection concepts such as plasmonic internal emission photodetectors (PIPED). Depending on the device concept and the electrical circuity and connectors of the photodetector, the spectrum of generated electromagnetic waveform may not extend to DC, but cover a frequency band having a non-zero center frequency. This is, e.g., the occur in UTC photodiodes coupled to rectangular THz or sub-THz waveguides. Further kinds of signal-detecting elements may also be feasible.

Complementing the apparatus by using at least one conversion element can, hence, open an attractive path towards targeted synthesis of electromagnetic waveforms in the mm-wave, sub-THz or THz frequency range: In a first step, the apparatus can be used for synthesizing the at least one targeted electromagnetic waveform, implemented as an optical waveform, from at least two tributary electromagnetic signals generated by at least two distinct electromagnetic signal generators. The broadband optical waveform or a portion thereof can, then, be converted into an associated converted electromagnetic waveform by the photodetectors, wherein the conversion can be a frequency shift, e.g., in case of homodyne, intradyne, or heterodyne detection of the broadband optical waveform in conjunction with an additional optical local oscillator (LO) tone, or can comprise more complex operations, such as a squaring of the optical field in case of direct detection. For direct detection, the broadband optical waveform may be designed to produce a desired electromagnetic waveform upon detection.

Further, the apparatus for synthesizing the at least one targeted broadband electromagnetic signal according to the present invention comprises at least one controlling element. As used herein, the term "controlling element" refers to a device which is configured to extract signal information about at least one relative amplitude and/or relative phase of the at least two tributary electromagnetic signals in the at least one combined electromagnetic signal from the at least one detection output signal and autonomously counteract deviations from desired operating parameters by generating the at least one actuator drive signal to act on at least one tributary electromagnetic signal via the at least one actuation element. As generally used, the term "extracting" or any grammatical variation thereof refers to generating at least one piece of signal information from at least one input signal. As further used herein, the term "deviations from desired operating parameters" or any grammatical variation thereof refers in particular to amplitude and/or phase errors of the tributary electromagnetic signals that cause impairments in the generation of the at least one targeted electromagnetic signal by the at least one signal-combining element. Also, further used herein, the term "acting on" or any grammatical variation thereof refers to modifying in particular at least one of an amplitude and/or phase of at least one tributary electromagnetic signal.

Compared to approaches known from prior art which aim to generate broadband electromagnetic signals, the present apparatus comprises a feedback control system which is configured to monitor and control the amplitude offset and/or phase offset between the at least two tributary electromagnetic signals in real-time, whereby a correct and reliable generation of the targeted broadband electromagnetic signal can be assured. Herein, the signal information about the relative amplitude and/or the relative phase of the at least two tributary electromagnetic signals can be extracted from the at least one detection output signal, in particular, by using interference properties of the pre-conditioned tributary electromagnetic signals, that may, but do not have to, be enhanced by additional auxiliary signal component, such as pilot tones. The extracted signal information about the relative amplitude and/or the relative phase of the at least two electromagnetic tributary electromagnetic signals can be used to drive at least one actuating element as described below in more detail, in particular by using at least one actuator drive signal, in order to allow the at least one actuating element to correct the amplitude and/or the phase between the at least two electromagnetic tributary electromagnetic signals in a feedback loop. Herein, the at least one controlling element may, in particular, assume a role of extracting the signal information about the relative amplitude and/or the relative phase, of determining the current state of the apparatus, and, if required, of performing at least one corrective action through the at least one actuating element in order to close the feedback loop, thereby actively stabilizing the amplitude and/or the phase with which the at least two tributary electromagnetic signals are combined into the at least one targeted broadband arbitrary signal. In a preferred embodiment, the at least one controlling element can be implemented by using a digital control circuit, specially selected from at least one of a microcontroller, a field-programmable gate array (FPGA), an electrical application-specific integrated circuit (ASIC). As an alternative, a purely analog or hybrid digital and analog feedback control circuit may also be feasible, depending on the properties of the at least one detection output signal. However, further kinds of control elements may also be feasible.

Further, the apparatus for synthesizing the at least one targeted broadband electromagnetic signal according to the present invention comprises at least one actuating element. As used herein, the term "actuating element" refers to a device which is configured to modify at least one of the amplitude or the phase of at least one of the at least two tributary electromagnetic signals based on the control signal generated by the control element. As used herein, the term "modifying" or any grammatical variation thereof refers to generating compensated tributary electromagnetic signals, in particular by using at least one actuator drive signal.

In particular, the at least one actuating element may act on one or more of the at least two tributary electromagnetic signals and generate at least one corresponding compensated tributary electromagnetic signal, which can be used as an input signal to the at least one signal-combining element in order to generate the targeted broadband electromagnetic signal by merging the at least two tributary electromagnetic signals in the signal-combining element. In this manner, the at least one predefined relative amplitude and/or relative phase of the tributary electromagnetic signals in the at least one combined electromagnetic signal can be achieved and maintained as desired.

In a further preferred embodiment, the at least one actuating element may, partially or completely, be integrated into at least one of the at least two electromagnetic signal generators. This may be case for an electromagnetic signal generator based on digital signal processing, where real-time phase and/or amplitude adjustments can be implemented into the signal-generating algorithm. Alternatively or in addition, analogue signal-generation elements may be directly controlled to provide the desired actuation functions.

In a further preferred embodiment, the at least one actuating element may comprise at least one further element, especially selected from at least one of a thermo-optic phase shifter, an electro-optic phase shifter, an acousto-optic phase shifter, or an elasto-optic phase shifter, which may be driven by a piezo-electric actuator. As generally used, the term "thermo-optic phase shifter" refers to phase shifter used predominately in photonic integrated circuits (PIC) which is based on the thermo-optic effect, wherein the optical properties of an optical waveguide structure are modified due to a temperature change. In particular, a temperature-dependent phase shift can be induced in a waveguide by heating, especially by using heat dissipated via a conducting metal structure in the vicinity of the waveguide. As further generally used the term "acousto-optic phase shifter" is used to refer to a device that introduces an optical phase or frequency shift, usually to a free-space optical beam, based on the acousto-optic effect, where a traveling optical signal interacts with an acoustic wave. As further generally used the term "elasto-optic phase shifter" refers to a device that can induce a phase shift of an optical signal propagating in a waveguide by exploiting the elasto-optic effect which allows changing the optical properties of the waveguide by applying strain, which results in a change of the optical phase accumulated by the traveling optical signal. This strain can, e.g., be induced by a piezoelectric phase shifter that is integrated on top of the waveguide structure. As further generally used, the term "electro-optic phase shifter" refers to a phase shifter, in which an applied voltage or and injected current changes the optical properties of the underlying materials. This change of optical properties can, e.g., be a consequence of the optical nonlinearities, such as the linear electro-optic effect (Pockels effect) or the electro-optic Kerr effect, or can result from a change of the refractive index due to injection of free carriers. Specifically, the Pockels effect occurs in non-centro-symmetric media such as $LiNbO_3$, $BaTiO_3$, or in electrically-poled organic materials. Such phase shifters are can be part of more complex arrangements that for the at least one actuating element, comprising electro-optic modulators that can change both the amplitude and the phase of the associated tributary electromagnetic signal, such as a Mach-Zehnder modulator (MZM) or an IQ modulator (IQM). As a further alternative, the actuating element can be selected from an endless phase shifter. As generally used, the term "endless phase shifter" refers to a device which can provide a continuously increasing phase shift even for range-limited electrical drive signals. Specifically, an endless phase shifter does not introduce any discontinuities that are usually caused by $2\pi$-phase shifts ("unwrapping") necessary stay within the operating range of the device. An endless phase shifter can, in particular, be implemented by using an IQ-Modulator or a network of Mach-Zehnder modulators and phase shifters. However, further kinds of actuating elements may also be feasible.

In a further preferred embodiment, the apparatus for synthesizing the at least one targeted broadband electromagnetic signal according to the present invention may, further, comprise at least one conversion element. As used herein, the term "conversion element" refers to a device which is configured to convert at least a portion of the at least one targeted broadband electromagnetic signal covering a particular frequency range into another signal, typically at different frequency range. As used herein, the term "converting" or any grammatical variation thereof refers to modifying the at least a portion of the at least one targeted broadband electromagnetic signal to produce a converted electromagnetic signal being output by the apparatus. As explained above, the at least one conversion element may, in particular, be based on high-speed photodiodes, in particular a conventional *p-i-n* photodiodes, triple-transit-region photodiodes (TTR-PD), and/or uni-traveling carrier (UTC) photodiodes, or on other optical signal-detection devices such as plasmonic internal emission photodetectors (PIPED).

In accordance with the present invention, the apparatus for synthesizing the at least one targeted broadband electromagnetic signal may, in a preferred embodiment, be arranged in a manner that it may comprise at least the above-indicated elements in an individual fashion. In an alternative embodiment, the apparatus may comprise a multitude of elements that may, preferably, be cascaded one after the other. In such a cascade, functions of combination, amplitude actuation, phase actuation, and signal detection may become intertwined. Especially by using integration technologies, such as photonic integrated circuits (PIC), by which multiple component functions can be integrated onto a common semiconductor chip, it may become challenging to partition individual elements of the apparatus clearly. Integrated photonic solutions can be obtained on monolithic photonic chips or on photonic multi-chip modules (MCM). In multi-chip modules (MCM), multiple chips, which may be based on different integration technologies, are combined and optically connected to one another - by precise alignment and/or by using 3D-printed optical coupling structures such as micro-lenses or photonic wire bonds. While retaining the functions, an optimized signal-combining element could be provided that can incorporates at least one of an amplitude actuating element, a phase actuating element, or a signal-detecting element.

Moreover, at least one of the at least one actuating element may be at least partially comprised by at least one of the at least two electromagnetic signal generators. Alternatively, or in addition, at least one of the at least one signal-detecting element may be integrated into at least one of the at least one signal-combining element or may be combined with the at least one signal-combining element in at least one photonic integrated circuit. As a further alternative or in addition, at least one of the at least one actuating element may be integrated into at least one of the at least one signal-combining element or may be combined with the at least one signal-combining element in at least one photonic integrated circuit. As a still further alternative or in addition, the at least one signal-combining element, the at least one signal-detecting element, and the at least one actuating element may be implemented together in at least one photonic integrated circuit. It is emphasized that this list is non-exhaustive; further kinds of integration of at least two elements may also be conceivable.

In a further aspect, the present invention relates to a system for synthesizing at least one targeted broadband electromagnetic signal, wherein the system comprises a plurality of apparatuses as described herein, wherein the plurality of the apparatuses are arranged in a cascaded manner. As generally used, the term "cascaded" refers to an arrangement in which at least one output signal of at least one element assigned to a particular stage of the arrangement is used as at least one input signal of at least one further element assigned to a consecutive stage following the particular stage. Thus, the plurality of the apparatuses according to the present invention may, in general, be arranged in the cascaded fashion one after the other.

In a particularly preferred embodiment, at least one first-stage apparatus may comprise all elements as indicated above, including the at least two electromagnetic signal generators, wherein the at least one targeted broadband electromagnetic signal as output by the at least one first-stage apparatus may be used as at least one of the at least two electromagnetic signal generators in the at least one second-stage apparatus. Similarly, the at least one targeted broadband electromagnetic signal as output by the at least one second-stage apparatus may be used as at least one of the at least two electromagnetic signal generators in the at least one third-stage apparatus, and so forth. In general, a cascaded arrangement comprising further consecutive stages may also be conceivable.

In a further preferred embodiment, the system for synthesizing the at least one targeted broadband electromagnetic signal according to the present invention may, further, comprise at least one conversion element, wherein the at least one conversion element is, as defined above, configured to convert at least a portion of the at least one targeted broadband electromagnetic signal covering a particular frequency range into another signal, typically at different frequency range. For further information concerning the at least one conversion element, reference can be made to the description above and/or below.

In a further aspect, the present invention relates to a method for synthesizing at least one targeted broadband electromagnetic signal, in particular by using the apparatus or the system as disclosed herein. The method comprises the following steps a) to d):

a) providing at least two tributary electromagnetic signals having spectra that overlap at least partially;
b) merging the at least two tributary electromagnetic signals into at least one combined electromagnetic signal;
c) detecting at least a portion of at least one of the at least one combined electromagnetic signal and extracting signal information about at least one of a relative amplitude or a relative phase with which the at least two tributary electromagnetic signals are merged into the at least one combined electromagnetic signal; and
d) modifying at least one of the amplitude or the phase of at least one of the at least two tributary electromagnetic signals based on the signal information,

wherein modifying the at least one of the amplitude or the phase of the at least one of the at least two tributary electromagnetic signals is performed in a manner that at least one of the at least one the combined electromagnetic signal corresponds to the at least one targeted broadband electromagnetic signal.

In particular accordance with the present invention, merging the at least two tributary electromagnetic signals is performed by modifying the at least one of the amplitude or the phase of the at least one of the at least two tributary electromagnetic signals in a manner that at least one of the one or more combined electromagnetic signals corresponds to the at least one targeted broadband electromagnetic signal, whereby the at least one targeted broadband electromagnetic signal is synthesized.

Herein, the indicated steps may, preferably, be performed in the given order, commencing with step a) and finishing with step d). In a particularly preferred embodiment, the indicated steps may be performed in a simultaneous and continuous manner, in particular, to provide a closed-loop control, preferably by consecutively iterating steps b), c), and d). As used herein, the term "closed-loop control" refers to a mode of operation in which the control action of the controlling element is dependent on the signal information extracted by the at least one signal-detecting element. In particular, the closed-loop control may be used within the present method by using the signal information about at least one relative amplitude and/or at least one relative phase of the at least two tributary electromagnetic signals which have been determined during step c) for modifying the at least one of the amplitude or the phase of the at least one of the at least two tributary electromagnetic signals in step d) prior to or during merging the at least two tributary electromagnetic signals into at least one combined electromagnetic signal according to step b).

In a further aspect, the present invention relates to a computer program for synthesizing at least one targeted broadband electromagnetic signal. Herein, the computer program comprises instructions which, when the program is executed by a computer, cause the computer to carry out the method for synthesizing at least one targeted broadband electromagnetic signal as disclosed herein. Specifically, the computer program may be stored on a computer-readable, non-transitory data carrier. Thus, specifically, any one or all of the method steps as indicated above may be performed by using a computer or a computer network, preferably by using the computer program.

For further details concerning the system, the method, and the computer program for synthesizing the at least one targeted broadband electromagnetic signal, reference can be made to the description of the apparatus for synthesizing the at least one targeted broadband electromagnetic signal above and/or below.

With respect to the known prior art, the apparatus, the system, the method, and the computer program for synthesizing the at least one targeted broadband electromagnetic signal exhibit the following advantages. A particular advantage is an active amplitude and/or phase stabilization of the involved tributary electromagnetic signals. Generating extractable signal information about amplitude and/or phase properties without impeding the arbitrary signal generation enables the application of a feedback control system configured to stabilize the signal generation under the influence of non-ideal system components and environmental changes, thereby and open new possibilities for reliable broadband signal synthesizer systems which, currently, cannot be conceivably achieved.

In particular, with respect to Geisler, et al., see above, to generate the correct waveform at at least one output port of the OAWG, the tributary electromagnetic signals need to be combined with the correct phase offset between each other. If left uncontrolled, the combination of the tributary electromagnetic signals can result in a random generation of any output signal not resembling the desired target signal. As seen in Geisler, et al. publication, this results in only 1 % of the measured output signal corresponding to the correct waveform by chance. Without a feedback control system as disclosed herein, generating broad optical signals using an OAWG is practically impossible. Geisler, et al., see above, assure that by implementing the OAWG scheme on an integrated photonic chip level the effect of the phase offsets can be minimized resulting in a better performance. A chip-scaled OAWG would suffer less from the effects of phase instability, such that the random varying amplitude and phase between tributary optical signals would remain a smaller but still unsolved issue. In contrast thereto, the present invention solves this issue completely for both chip-scale systems and implementations based on discrete free-space-based optical components or fiber-based optical components by correcting the amplitudes and/or phases actively.

Combining a multitude of tributary electromagnetic signals to generate a specific waveform without any knowledge of their amplitude relations and/or phase relations will - without the solution as provided by the present invention - be left to pure chance. Other current state-of-the-art OAWG technology has no monitor or control mechanism, whether automated or not, to assure that the output waveform is generated according to a specification of a user. This renders the implementation of OAWG challenging, in particular when two or more tributary electromagnetic signals are to be merged to form the desired broadband arbitrary signal. The solution for a reliable generation of high-quality broadband signals for extended periods is to propose the apparatus as disclosed herein, which can monitor the relationship between tributary electromagnetic signals and adjust it accordingly.

As a result, the apparatus for synthesizing a targeted broadband electromagnetic signal as disclosed herein surpasses all equivalent devices developed so far by an ability to generate and use a feedback signal which provides real-time signal information about the relationship between the at least two tributary electromagnetic signals, which in turn allows to correct any offset between the at least two tributary electromagnetic signals in both amplitude and phase, thus, assuring that the desired correct output signal is generated. The adjustment between the at least two tributary electromagnetic signals is performed via a feedback control loop, which allows for compensating amplitude offsets and/or phase offsets autonomously during a normal operation of the apparatus over an extended period of time.

As used herein, the terms "have", "comprise" or "include" or any grammatical variation thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

As further used herein, the terms "specifically", "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention, and without any restriction regarding the possibility of combining the features introduced in this way with other features of the invention.

Short description of the Figures

Further optional features and embodiments of the present invention are disclosed in more detail in the subsequent description of preferred embodiments, preferably in conjunction with the dependent claims. Therein, the respective optional features may be implemented in an isolated fashion as well as in any arbitrary feasible combination, as the skilled person will realize. It is emphasized here that the scope of the invention is not restricted by the preferred embodiments. In the Figures:

Figure 1    schematically illustrates exemplary embodiments of an apparatus for synthesizing at least one targeted broadband electromagnetic signal according to the present invention;

Figure 2    schematically illustrates an exemplary embodiment having a common electromagnetic signal source;

Figure 3    schematically illustrates an exemplary embodiment of a system for synthesizing at least one targeted broadband electromagnetic signal according to the present invention, wherein the system comprises a plurality of apparatuses arranged in a cascaded manner;

Figure 4    schematically illustrates an exemplary embodiment of the apparatus element having a multitude of elements arranged in a cascaded manner;

Figure 5    shows a diagram illustrating an exemplary embodiment of two tributary electromagnetic signals having spectra that overlap at least partially;

Figure 6 shows a diagram illustrating an exemplary embodiment of a transfer function of three input ports to one output port of a frequency-selective signal-combining element;

Figure 7 schematically illustrates an exemplary embodiment of a method for synthesizing at least one targeted broadband electromagnetic signal according to the present invention;

Figure 8 schematically illustrates a further exemplary embodiment of the apparatus for synthesizing the at least one targeted broadband electromagnetic signal according to the present invention;

Figure 9 schematically illustrates an exemplary spectral composition of signals $\underline{a}_{s1}(t)$ and $\underline{a}_{s2}(t)$, each having contributing signals referred to as $\underline{u}_s(t)$ and $\underline{r}(t)$;

Figure 10 schematically illustrates a diagram illustrating a temporal course of measured signals during a proof-of-concept operation;

Figure 11 schematically illustrates two diagrams illustrating a measurement without phase stabilization (Figure 11a) and with phase stabilization (Figure 11b);

Figure 12 schematically illustrates an exemplary embodiment of the apparatus having a multitude of signal-combining elements arranged in a cascaded manner;

Figure 13 schematically illustrates a diagram illustrating an exemplary embodiment of four tributary electromagnetic signals having spectra that overlap at least partially;

Figure 14 schematically illustrates a further exemplary embodiment of the apparatus for synthesizing the at least one targeted broadband electromagnetic signal with tributary electromagnetic signals that individually cover the full range of the target broadband electromagnetic waveform;

Figure 15 schematically illustrates a diagram illustrating an exemplary embodiment of four tributary electromagnetic signals having spectra which cover the full bandwidth of the targeted broadband electromagnetic waveform;

Figure 16 schematically illustrates a diagram illustrating an exemplary embodiment of an optical frequency tone used as a phase-controlled local oscillator together with a broadband optical signal; and

Figure 17 schematically illustrates a further exemplary embodiment of the apparatus for synthesizing a broadband electrical signal using a broadband optical signal with a phase-controlled local oscillator and a broadband balanced photodetector acting as a conversion element.

Detailed description of the embodiments

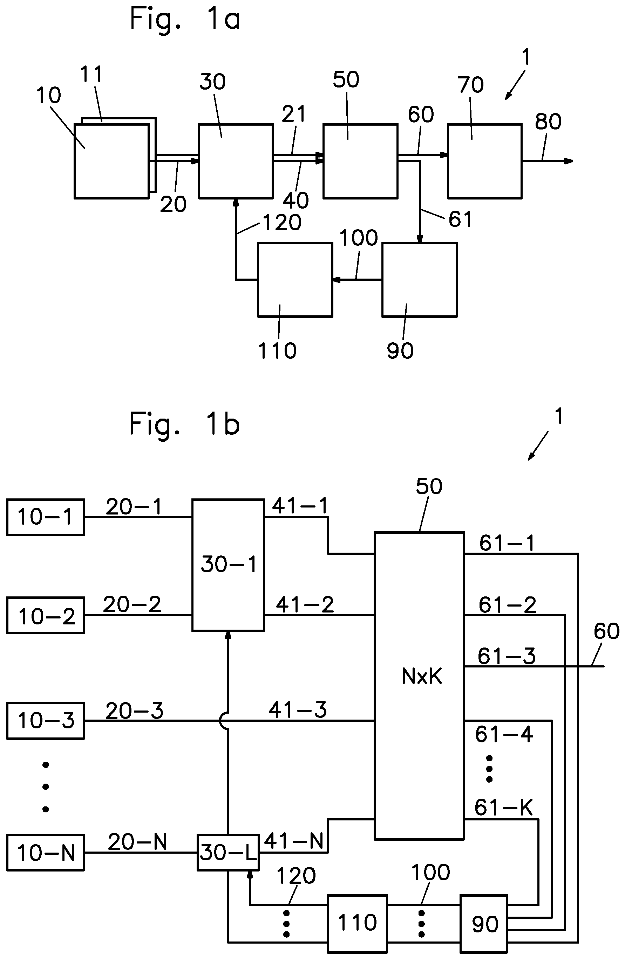

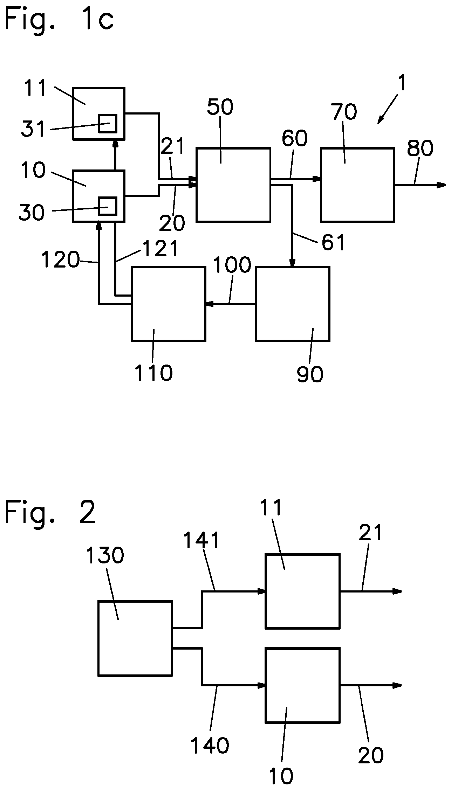

Figure 1 schematically illustrates exemplary embodiments of an apparatus 1 for synthesizing at least one targeted broadband electromagnetic signal 60 according to the present invention. Herein, the apparatus 1 can be used as an optical arbitrary waveform generator (OAWG).

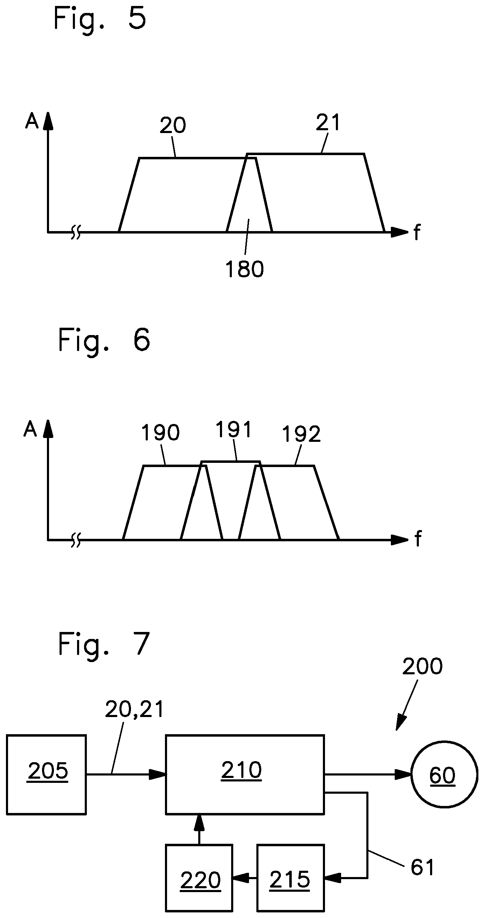

The exemplary apparatus 1 as depicted in Figure 1a comprises two electromagnetic signal generators 10, 11, which are configured to generate two tributary electromagnetic signals 20, 21 having frequency spectra that at least partially overlap as schematically depicted below in Figure 5. However, three, four, or more tributary electromagnetic signals having frequency spectra that at least partially overlap may also be feasible.

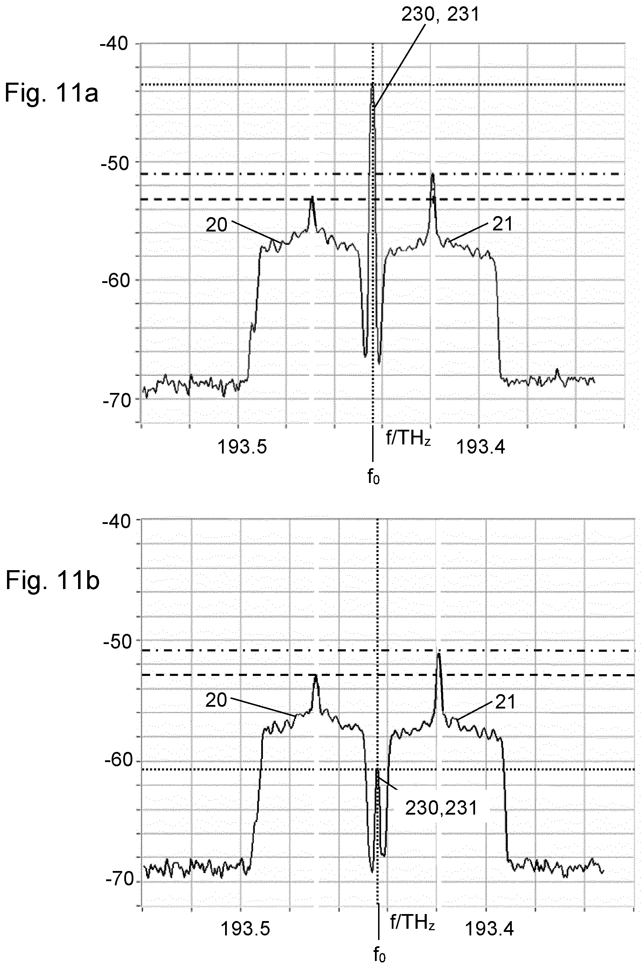

In an embodiment in which any of the targeted broadband electromagnetic signals features no or only very weak signal components in the spectral overlap region between at least two tributary electromagnetic signals, auxiliary signals can be added which are configured for a reliable detection of interference signals, thereby not impairing the generated targeted broadband electromagnetic signal. An example thereof is presented below in Figure 11.

In the exemplary embodiment of Figure 1a, an actuating element 30 is located in at least one of the tributary electromagnetic signal paths in front of a signal-combining element 50. Herein, the at least one actuating element 30 is configured to modify the tributary electromagnetic signal 20 in order to compensate for any relative amplitude errors and/or phase errors and fluctuations between the tributary electromagnetic signals that may arise in the apparatus 1, whereby at least one compensated tributary electromagnetic signal 40 is generated. In an alternative embodiment (not depicted here), it may also be feasible that more than one actuating element 30 may be located in front of the signal-combining element 50.

The signal-combining element 50 as depicted in Figure 1a is configured to merge the compensated tributary electromagnetic signal 40 with the tributary electromagnetic signal 21 using the actuating elements 30. It is indicated here that in this particular embodiment a further tributary electromagnetic signal is not compensated before the signal-combining element 50 since all compensation is applied to the remaining tributary electromagnetic signal 20. In an alternative embodiment (not depicted here), two compensated tributary electromagnetic signals 40 may be merged in the signal-combining element 50, wherein the two compensated tributary electromagnetic signals 40 may be produced by two associated actuation elements 30. The two signals 40, 21 are combined here by superimposing them with a predefined amplitude and phase relationship such that two combined electromagnetic signals 60, 61 are generated at the output of the signal-combining element 50, where signal 60 also corresponds to the targeted broadband electromagnetic signal. In the general (not depicted here), the number of combined electromagnetic signals generated at the output of the signal-combining element may vary depending of the number of tributary electromagnetic signals.

The targeted broadband electromagnetic signal 60 may, directly, be output by the apparatus 1. However, in the exemplary embodiment as illustrated in Figure 1a, the targeted broadband electromagnetic signal 60 can, prior to being output by the apparatus 1, be guided through a conversion element 70 in order to generate a converted output waveform 80 that may cover a different frequency range than the targeted broadband electromagnetic signal 60. Specifically, the targeted broadband electromagnetic signal 60 can be an optical signal, whereas the converted output waveform 80 may be an electromagnetic signal selected from a microwave signal, a mm-wave signal, a sub-THz signal, or a THz signal, generated by a sufficiently fast photodetector 70.

As further depicted in Figure 1a, the combined electromagnetic signal 61 is guided to a signal-detecting element 90, which is configured to generate a detection output signal 100 that comprises signal information about the relative amplitudes and the phases by which the at least two tributary electromagnetic signals 40, 21 are superimposed at the output of the signal-combining element 50. Further, a controlling element 110 is configured to use the signal information about the relationship between the amplitudes and the phases of the two superimposed tributary electromagnetic signals 40, 21 in order to drive the at least one electromagnetic actuating element 30 by using at least one actuator drive signal 120 which is configured to modify at least one of the tributary electromagnetic signals 20. For this purpose, the actuator drive signal 120 may comprise a feedback amplitude compensation signal and/or a feedback phase compensation signal at least one of which may ensure that the relationship between the amplitudes and the phases of the two superimposed tributary electromagnetic signals 40, 21 is met and, thus, maintained at the respective output of the signal-combining element 50 for successful superposition and successful synthesis of the targeted broadband electromagnetic signal 60.

In an alternative embodiment as shown in Figure 1b, the apparatus 1 is configured to merge a number $N$ of tributary electromagnetic signals 20-1 ... 20-N, generated by associated signal generators 10-1 ... 10-N, into $K$ combined electromagnetic signals 61 - 1 ... 61 - K, which contain one or more targeted electromagnetic signals 60. A group of $M \leq N$ of the tributary signals is sent through one or more actuating elements 30-1 ... 30-L , $L \leq M$, to produce $M$ corresponding compensated electromagnetic signals, which, together with the remaining (N-K) uncompensated tributary electromagnetic signals, form the input signals 41-1 ... 41-N of the signal-combining element 50. The signal-combining element 50 has $N$ input ports and $K$ output ports, generating $K$ combined electromagnetic signals 61 - 1 ... 61 - K from its $N$ input signals 40-1 ... 40-N. Herein, not all tributary electromagnetic signals 20-1 ... 20-N need to be sent through an associated actuation element, i.e., $M \leq N$, and each actuation element can process one or more tributary electromagnetic signals, i.e., $L \leq M$. The actuation elements 30-1 ... 30-L are controlled by one or more controlling elements 110, which are fed by one or more signal-detection elements 90, configured to generate one or more detection output signals 100 that contain information about the relative amplitudes and the phases with which the tributary electromagnetic signals 20 - 1 ... 20 - N are superimposed at the outputs of the signal-combining element 50. The at least one signal-detecting element 90 is fed by a group of at least one of the combined electromagnetic signals 61-1 ... 61-K that are produced at the outputs of the signal-combining element 50. In analogy to Fig. 1a, the actuator drive signals 120 may comprise amplitude-compensation signals and/or a phase-compensation signals which ensure that the relative amplitudes and the phases with which the tributary electromagnetic signals 20-1 ... 20-N are superimposed at the outputs of the signal-combining element 50 are maintained, thereby permitting targeted synthesis of the at least one broadband electromagnetic signal 60.

Figure 1c schematically illustrates a further exemplary embodiment of the apparatus 1 according to present invention, wherein the actuating elements 30, 31 are integrated into the corresponding electromagnetic signal generators 10, 11. For this purpose, a digital or an analogue signal generator equipped with additional input ports may be used here for receiving the actuator drive signals 120, 121 which are translated into real-time phase and/or amplitude adjustments during signal generation. In a further alternative (not depicted here) only a sub-set of the electromagnetic signal generators 10, 11 is equipped with internal actuating elements 30, 31.

Figure 2 schematically illustrates an exemplary embodiment of a common electromagnetic signal source. Whereas the exemplary embodiment as depicted in Figures 1a and 1b comprises the two signal generators 10, 11 which are based on independent electromagnetic signal sources, the further exemplary embodiment as illustrated in Figure 2 comprises a common electromagnetic signal source 130, which is configured to provide at least one reference signal 140, 141 to each of signal generator 10, 11 for generating the two tributary electromagnetic signals 20, 21.

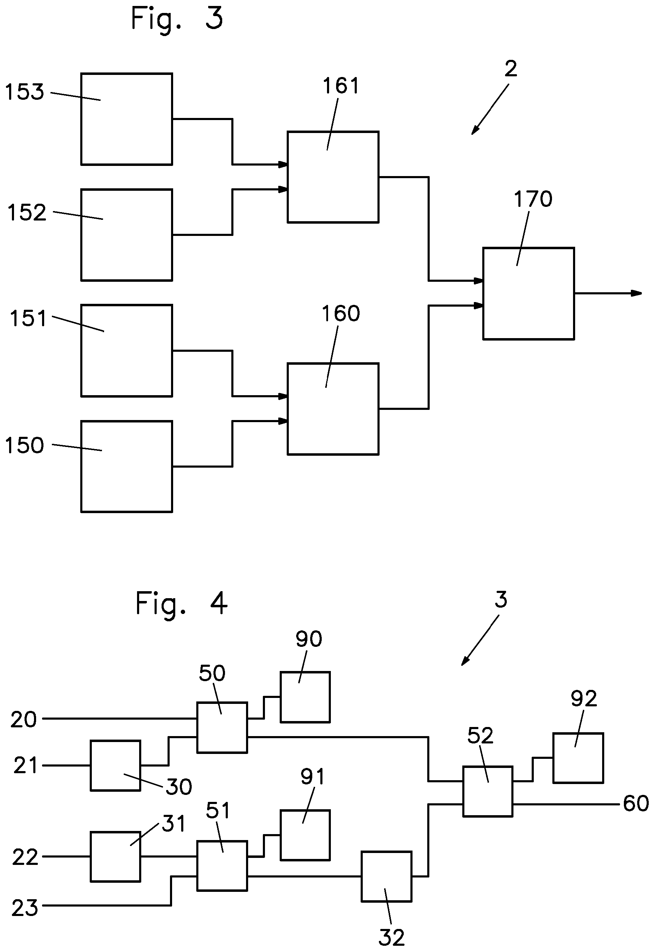

Figure 3 schematically illustrates an exemplary embodiment of a system 2 for synthesizing the targeted broadband electromagnetic signals 60 which can, in particular, be also used as an optical arbitrary waveform generator (OAWG). The exemplary system 2 as depicted here comprises a plurality of apparatuses 150, 151, 152, 153, 160, 161, 170, which are arranged in a cascaded manner having three consecutive stages. The first-stage apparatuses 150, 151, 152, 153 as used herein have their own signal generators (not depicted here), which may be using the common electromagnetic signal source 130 as schematically illustrated in Figure 2. The output signals of the first-stage apparatuses 150, 151, 152, 153 may replace the electromagnetic signals generators of the second-stage apparatuses 160, 161. In a similar fashion, the output ports of second-stage apparatuses 160, 161 could be configured to feed the single third-stage apparatus 170. In general, no theoretical limit to the number of stages exists.

Figure 4 schematically illustrates an exemplary embodiment of an integrated circuit, in particular a photonic integrated circuit (PIC) 3, having a multitude of elements which are arranged in a cascaded fashion. Herein, signal-combining elements 50, 51, 52 are integrated together with actuating elements 30, 31, 32, and signal-detecting elements 90, 91, 92. The exemplary embodiment of an integrated circuit 3 as shown in Figure 4 illustrates an embodiment which combines four tributary electromagnetic signals 20, 21, 22, 23 with multiple signal-combining elements 50, 51, 52, each only being configured to combine two of the four tributary electromagnetic signals 20, 21, 22, 23 at a time. In a further embodiment (not depicted here), functionally equivalent circuit variations can be provided in which the individual elements can be placed at different positions without changing the core functionality of the integrated circuit 3. In the exemplary embodiment of Figure 4, the actuating element 32 is positioned to operate on the output of the signal-combining element 52 but could functionally also be placed in front of the signal-combining element 51 in order to operate on the tributary electromagnetic signal 23. Depending on the location of the actuating elements 30, 31, 32, the corresponding actuator drive signal (not depicted here) might vary.

Figure 5 shows a diagram illustrating an exemplary embodiment of an amplitude spectrum A over a frequency f of the two tributary electromagnetic signals 20, 21 which have spectra that overlap at least partially in a common overlap range 180.

Figure 6 shows a diagram illustrating an exemplary embodiment of an amplitude spectrum A over a frequency f of a transfer function of three input ports 190, 191, 192 to one output port of a frequency-selective signal-combining element. In case of optical signals, such transfer functions might, e.g., be provided by using arrayed waveguide gratings (AWG).

Figure 7 schematically illustrates an exemplary embodiment of a method 200 for synthesizing one targeted broadband electromagnetic signal according to the present invention. Herein, the method 200 may, in particular, be performed by using the apparatus 1 or the system 2 as disclosed herein.

In a providing step 205, the two tributary electromagnetic signals having spectra that overlap at least partially in a common overlap range 180 are provided, in particular by using the two electromagnetic signal generators 10, 11 or the output signals of an apparatus of a preceding stage as described above in more detail. However, providing three, four, or more tributary electromagnetic signals may also be feasible, wherein two frequency-adjacent signals have at least partially overlapping spectra, potentially mediated by appropriate auxiliary signals,.

In a merging step 210, the at least two tributary electromagnetic signals are merged into at least one combined electromagnetic signal, in particular by using the one or more signal-combining elements as described above.

In a detecting step 215, a least a portion of at least one of the combined electromagnetic signals is detected, in particular by using the one or more signal-detecting elements 90, 91, 92 as described above. Further, signal information about the relationship between the amplitudes and the phases with which the two or more tributary electromagnetic signals are combined in the at least one signal-combining element is extracted from the at least one combined electromagnetic signal 61, in particular by using the signal-detecting element 90 as described above in more detail.

In a modifying step 220, the relationship between the amplitudes and the phases of the two or more tributary electromagnetic signals is modified, in particular by using the one or more actuating elements as described above in more detail.

In accordance with the present invention, all steps are performed in parallel and continuously. As a consequence, the merging step 210 is performed by using the relationship between the amplitudes and the phases of the two or more tributary electromagnetic signals after having been modified by applying the modifying step 220 in a manner that the targeted broadband electromagnetic signals are synthesized.

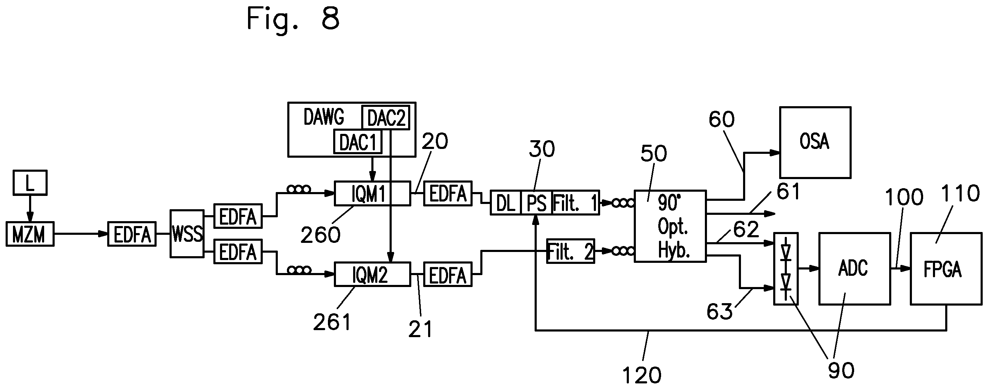

Figure 8 schematically illustrates a demonstration setup as a further exemplary embodiment of the apparatus 1 for synthesizing the broadband electromagnetic signals 60 according to the present invention. Herein, two optical signals are generated as the tributary electromagnetic signals 20, 21 by modulating two optical carriers using optical in-phase/quadrature (I/Q) modulators 260, 261 that may be driven from an arbitrary RF waveform generator comprising one or more digital-to-analogue converters (DAC). The corresponding optical carriers are generated from an optical comb source by separating two optical tones from the comb by using a wavelength selective switch (WSS). Preferably, the tones of the optical combs are phase-locked, thereby minimizing the random phase variations between them. In the illustrated implementation, the comb itself is generated by modulating a laser source L using an MZM. In the example as illustrated in Figure 8, the comb only provides two optical carriers. It is, however, also possible to extract more than two phase-locked comb tones from a single comb source, e.g., by operating the MZM with a large-amplitude sinusoidal electrical driving signal, by using cascades of amplitude and phase modulators, or by relying on other comb-generation concepts such as Kerr comb sources, that are known in the literature. In conjunction with a modulator, a large-amplitude drive signal means a drive signal whose amplitude swing is large enough to push the MZM into the nonlinear region of operation of its transfer function. A multitude of erbium-doped fiber amplifiers (EDFA) are used here to boost optical signal powers in apparatus 1.

Both tributary electromagnetic signals 20, 21 are filtered after the optical in-phase/ quadrature (I/Q) modulators 260, 261 by using filters Filt.1 and Filt. 2, especially in order to suppress broadband noise generated by the EDFA. Herein, the fibers are length-matched by using a delay line DL. One of the signal paths further, comprises the at least one actuating element 30 which is implemented here by using an all-fiber piezo phase shifter PS.

As shown in Figure 8, a 90° optical hybrid is used here as the signal-combining element 50. In this implementation, two of the four output ports of the signal-combining element 50 are used as input to a balanced photodetector connected to an analog-to-digital converter ADC, functioning together as the signal-detecting element 90. Further, a field-programmable gate array (FPGA) or some other electronic circuit offering the required functionality are used to implement the controlling element 110, which is configured to extract the signal information about the relative phases with which the two tributary optical signals are combined in the signal-combining element and to control the relative phase to the required state by using the actuating element 30. The targeted synthesized broadband optical signal 60 is guided to an optical spectral analyzer OSA which is configured to monitor the optical spectrum of the synthesized broadband optical waveform.

In the following, an exemplary algorithm for detecting and correcting the phase offset between two tributary electromagnetic signals 20, 21 to assure the correct synthesis of the targeted broadband signal 60 presented. In our notation, complex-valued signals $\underline{x}(t)$ are denoted by an underscore. $\Re\{...\}$ denotes the real part of a complex-valued argument while $\Im\{...\}$ denotes the imaginary part. For a given time-domain signal $\underline{x}(t)$, the Fourier transform $\underline{\tilde{x}}(f)$ is denoted by a tilde on top of the symbol. The complex-valued optical output signals of IQM 1 and IQM 2 as depicted in Figure 8 can be written as

$$(1.1) \qquad \underline{a}_{s1}(t) = \underline{A}_1(t)e^{j\omega_c t} = \left(\underline{u}_{s1}(t) + \underline{r}_1(t)\right)e^{j\omega_c t},$$

$$(1.2) \qquad \underline{a}_{s2}(t) = \underline{A}_2(t)e^{j\omega_c t} = \left(\underline{u}_{s2}(t) + \underline{r}_2(t)\right)e^{j\omega_c t}.$$

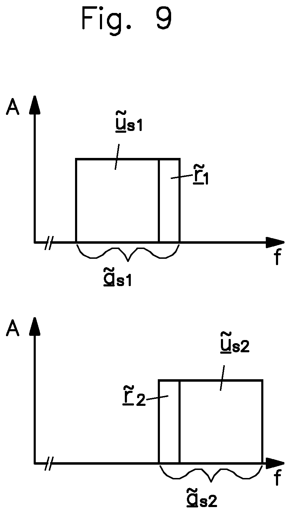

In this relation where, $\underline{a}_{s1}(t)$ represents the output signal of IQM 1 and $\underline{a}_{s2}(t)$ the output signal of IQM 2, while $\underline{A}_1(t)$ and $\underline{A}_2(t)$ are slowly varying complex-valued envelopes, which are defined with respect to a common carrier frequency $\omega_c$. Each of the tributary-signal envelopes $\underline{A}_1(t)$ and $\underline{A}_2(t)$ is composed of two parts, referred to as $\underline{u}_{s1}(t)$, $\underline{u}_{s2}(t)$ and $\underline{r}_1(t)$, $\underline{r}_2(t)$. The signal $\underline{u}_{s1}(t)$ comprises the part to signal $\underline{a}_{s1}(t)$, whose frequency spectrum $\underline{\tilde{a}}_{s1}(f)$ does not overlap with the spectrum $\underline{\tilde{a}}_{s2}(f)$ of signal $\underline{a}_{s2}(t)$, while $\underline{r}_1(t)$ comprises the part of signal $\underline{a}_{s1}(t)$ whose spectrum overlaps with the spectrum of the signal $\underline{a}_{s2}(t)$. The signals $\underline{u}_{s2}(t)$ and $\underline{r}_2(t)$ are defined accordingly, see Figure 9, which illustrates an exemplary composition of the spectra of the signals $\underline{a}_{s1}(t)$ and $\underline{a}_{s2}(t)$. To ensure detectable interference signals as needed for the phase control, the signal contributions $\underline{r}_1(t)$ and $\underline{r}_2(t)$ may be purposefully engineered to produce a technically advantageous detection output signal such that when superimposed in the 90° optical hybrid and detected by a balanced photodetector, preferably without impairing the generated targeted broadband electromagnetic signal 60. At the 90° optical hybrid, the signal $\underline{a}_{s1}(t)$ and $\underline{a}_{s2}(t)$ are superimposed, whereby four output signals 60, 61, 62, 63 are generated, that are referred to as $\underline{a}_0(t)$, $\underline{a}_1(t)$, $\underline{a}_2(t)$, $\underline{a}_3(t)$,

$$(1.3) \qquad \underline{a}_0(t) = \frac{1}{2}\left(\underline{a}_{s_1}(t) + \underline{a}_{s_2}(t)\right)$$

$$(1.4) \qquad \underline{a}_1(t) = \frac{1}{2}\left(\underline{a}_{s1}(t) - \underline{a}_{s2}(t)\right)$$

$$(1.5) \qquad \underline{a}_2(t) = \frac{1}{2}\left(\underline{a}_{s1}(t) - j\underline{a}_{s2}(t)\right)$$

$$(1.6) \qquad \underline{a}_3(t) = \frac{1}{2}\left(\underline{a}_{s1}(t) + j\underline{a}_{s2}(t)\right)$$

From these four outputs, signals $\underline{a}_2(t)$ and $\underline{a}_3(t)$ are used as input for the signal-detecting element 90 similar to the combined electromagnetic signal 61 in the exemplary embodiment of Figure 1a, while $\underline{a}_0(t)$ is designated as the output of the apparatus 1, which, under correct operation of the feedback control loop, matches the targeted broadband electromagnetic signal $\underline{a}_s(t)$, which is represented by a complex-valued envelope $\underline{A}_s(t)$ and the corresponding carrier frequency $\omega_c$,

$$(1.7) \qquad \underline{a}_0(t) = \frac{1}{2}\left(\left[\underline{u}_{s1}(t) + \underline{r}_1(t)\right] + \left[\underline{r}_2(t) + \underline{u}_{s2}(t)\right]\right)e^{j\omega_c t} = \underline{A}_s(t)e^{j\omega_c t}$$

In the following, the signal envelope $\underline{A}_{s,r}(t)$ represents the part of the targeted broadband electromagnetic signal envelope $\underline{A}_s(t)$, whose frequency spectrum extends only over the overlap range 180 of the two tributary electromagnetic signals, see Fig. 9. The superposition of the contributing signals $\underline{r}_1(t)$ and $\underline{r}_2(t)$ at the output port associated with the targeted electromagnetic signal must hence fulfill the relation

$$(1.8) \qquad \underline{r}_1(t) + \underline{r}_2(t) = 2\underline{A}_{s,r}(t)$$

During normal system operation, due to random drifts of the optical paths lengths as well as due to phase and amplitude fluctuations of the comb tones, a phase offset and possibly also an amplitude offset can occur between the two tributary electromagnetic signals 20, 21. In the following, we restrict our analysis to the case of a phase offset, which is the dominant impairment in most cases of practical interest. This phase offset, which occurs as a consequence of such perturbations, is denoted by multiplying an additional term to the expression for signal $\underline{a}_{s1}(t)$, resulting in $\underline{a}_{s1}(t)e^{j\varphi(t)}$. As an alternative, the additional term may be multiplied to the expression for signal $\underline{a}_{s2}(t)$ or be split between the two signals $\underline{a}_{s1}(t)$ and $\underline{a}_{s2}(t)$.

The signals $\underline{a}_2(t)$ and $\underline{a}_3(t)$ are guided to a low-speed balanced photodetector to produce the detection output signal 100 upon detection by a signal-detecting element 90 the comprises a balanced photodetector and an ADC, see Fig. 8. This leads to an electrical detection output signal $I(t)$, which is proportional to the difference of the square of the amplitude of each signal,

$$(1.9) \qquad I(t) = R\left|\underline{a}_2(t)\right|^2 - R\left|\underline{a}_3(t)\right|^2$$

where $R$ denotes the responsivity of the photodiodes in the detector, which we assume to be perfectly balanced in the following. Using Eqs. (1.5) and (1.6) and including the phase perturbation $e^{j\varphi(t)}$ of signal $\underline{a}_{s1}(t)$, the square modulus expression in Equation (1.9) can be written as

$$(1.10) \quad \left|\underline{a}_2(t)\right|^2 = \frac{1}{4}\left(\left|\underline{a}_{s1}(t)e^{j\varphi(t)}\right|^2 + \left|j\underline{a}_{s2}(t)\right|^2 + 2\Re\left\{-j\underline{a}_{s1}(t)\underline{a}_{s2}^*(t)e^{j\varphi(t)}\right\}\right)$$

$$(1.11) \quad \left|\underline{a}_3(t)\right|^2 = \frac{1}{4}\left(\left|\underline{a}_{s1}(t)e^{j\varphi(t)}\right|^2 + \left|-j\underline{a}_{s2}(t)\right|^2 + 2\Re\left\{j\underline{a}_{s1}(t)\underline{a}_{s2}^*(t)e^{j\varphi(t)}\right\}\right),$$

wherein $\underline{x}^*$ denotes the complex conjugate of the complex-valued quantity $\underline{x}$. Equation (1.9) can thus be rewritten as

$$(1.12) \qquad I(t) = R\Im\left\{\underline{a}_{s1}(t)\underline{a}_{s2}^*(t)e^{j\varphi(t)}\right\}$$

Equation (1.12) can be expanded by using the expressions for $\underline{a}_{s1}(t)$ and $\underline{a}_{s2}(t)$ from Equations (1.1) and (1.2),

$$(1.13) \quad I(t) = R\Im\left\{\left(\underline{u}_{s1}(t)\underline{u}_{s2}^*(t) + \underline{u}_{s1}(t)\underline{r}_2^*(t) + \underline{r}_1(t)\underline{u}_{s2}^*(t) + \underline{r}_1(t)\underline{r}_2^*(t)\right)e^{j\varphi(t)}\right\}$$

From the four additive expressions on the right-hand side of Equation (1.13), only the term containing both signal contributions $\underline{r}_1(t)$ and $\underline{r}_2(t)$ is relevant to the detection output signal. This can be understood by considering that the bandwidth of the signal-detecting element 90 is limited and preferably chosen such that the frequency spectrum of the term

$\underline{u}_{s1}(t)\underline{u}^*_{s2}(t)$ falls outside the detection range of the element. The two remaining terms $\underline{u}_{s1}(t)\underline{r}^*_2(t)$ and

$\underline{r}_1(t)\underline{u}^*_{s2}(t)$ contain low-frequency components, generated by the beating of spectrally close components of $\underline{u}_{s1}(t)$ and $\underline{r}_2(t)$ and of $\underline{u}_{s2}(t)$ and $\underline{r}_1(t)$ within the detection range of the element 90, but have a much weaker contribution to the current $I(t)$. Under these conditions we can rewrite Equation (1.13) as

$$(1.14) \qquad I(t) \approx i_{fb}(t) = R\Im\left\{\underline{r}_1(t)\underline{r}^*_2(t)e^{j\varphi(t)}\right\},$$

where $i_{fb}(t)$ denotes the contribution to the detection output signal 100 that is used for the phase control.

For a technically robust compensation of the phase fluctuations $\varphi(t)$ and of potential amplitude fluctuations, it would be beneficial if, by proper choice of the time-varying signals $\underline{r}_1(t)$ and $\underline{r}_2(t)$, the feedback signal, expressed by the photocurrent $I(t)$ in Eq. (1.14) would depend only on the phase offset $\varphi(t)$ or on the associated amplitude offset to be compensated, and not on targeted broadband electromagnetic signal or on its spectral content in the overlap region of the two tributary signals considered here. This can be accomplished by configuring at least one of the electromagnetic signal generators to shape at least a spectral fraction of at least one tributary electromagnetic signal in the spectral overlap region with at least one other tributary electromagnetic signal, such that the feedback signal generated by interference of the two tributary electromagnetic signals is independent of targeted electromagnetic waveform. Specifically, the shaping of the tributary electromagnetic can be chosen such that the signals $\underline{r}_1(t)$ and $\underline{r}_2(t)$ fulfill the relation

$$(1.15) \qquad -R\underline{r}_1(t)\underline{r}^*_2(t) = I_{BD}$$

in addition to Equation (1.8). The parameter $I_{BD}$ in Equation (1.15) is a time-invariant positive real-valued quantity, which is independent of the signal contributions $\underline{r}_1(t)$ and $\underline{r}_2(t)$. Inserting Equation (1.15) into Equation (1.14) results in

$$(1.16) \qquad i_{fb}(t) = -\Im\left\{I_{BD}e^{j\varphi(t)}\right\} = -I_{BD}\sin\left(\varphi(t)\right) \approx -I_{BD}\varphi(t),$$

thus making the detection output signal 100 proportional to the phase offset $\varphi(t)$ and particularly making $i_{fb}(t)$ linearly proportional to $\varphi(t)$ in the case of $\varphi(t) \square 1$, i.e., close to the targeted value $\varphi(t) = 0$. Looking into Equation (1.16) it becomes evident that in order to reduce the phase offset $\varphi(t)$ to zero the current $i_{fb}(t)$ must become zero and vice-versa, thus during normal operation of the system the relative phase between the tributary electromagnetic signals must be changed in such a manner that the magnitude of the current $i_{fb}(t)$ is minimized, which guarantees that $\varphi(t)$ is minimized. In case of a linear relationship, this can, e.g., be accomplished by a linear feedback loop, e.g., as PID controller.

For proper design of the time-varying signals $\underline{r}_1(t)$ and $\underline{r}_2(t)$ in the spectral overlap region between the tributary electromagnetic signals, we distinguish two cases, depending on the content of the targeted broadband electromagnetic $\underline{a}_s(t)$ signal in the overlap region. In case the targeted broadband electromagnetic signal $\underline{a}_s(t)$ has non-zero spectral signal content in the overlap region, i.e. $\underline{A}_{s,r}(t) \neq 0$, $\underline{r}_1(t)$ and $\underline{r}_2(t)$ may be generated from the ansatz

$$(1.17) \qquad \underline{r}_1(t) = \left(1+\gamma(t)\right)\underline{A}_{s,r}(t),$$

$$(1.18) \qquad \underline{r}_2(t) = \left(1-\gamma(t)\right)\underline{A}_{s,r}(t),$$

thereby still fulfilling Equation (1.8). In Equations (1.17) and (1.18), $\gamma(t)$ is a time-dependent proportionality factor. By inserting Equations (1.17) and (1.18) into Equation (1.15) and solving for $\gamma(t)$, we find

$$(1.19) \qquad \gamma(t) = \sqrt{\frac{I_{BD}}{R\left|\underline{A}_{s,r}(t)\right|^2} + 1} \, .$$

Note that $\gamma(t) > 1$ as long as $I_{BD}$ is a real positive quantity. Using Equation (1.19) as an expression for $\gamma(t)$, $\underline{r}_1(t)$ and $\underline{r}_2(t)$ can be computed from Equations (1.17) and (1.18),

$$(1.20) \qquad \underline{r}_1(t) = \left(1 + \sqrt{\frac{I_{BD}}{R\left|\underline{A}_{s,r}(t)\right|^2} + 1}\right)\underline{A}_{s,r}(t)$$

$$(1.21) \qquad \underline{r}_2(t) = \left(1 - \sqrt{\frac{I_{BD}}{R\left|\underline{A}_{s,r}(t)\right|^2} + 1}\right)\underline{A}_{s,r}(t) \, .$$

Note that Equations (1.20) und (1.21) only represent one exemplary choice of engineered signals $\underline{r}_1(t)$ and $\underline{r}_2(t)$. Other approaches are also possible. As an example, $\underline{r}_1(t)$ and $\underline{r}_2(t)$ could also be generated by adding auxiliary signal components to $\underline{A}_{s,r}(t)$ such that Equations (1.8) and (1.15) are simultaneously fulfilled. This can be accomplished by configuring least one of the electromagnetic signal generators 10 to shape at least one tributary electromagnetic signal by adding of auxiliary signal components in the spectral overlap region with the at least one other tributary electromagnetic signal.

In case the signal content of $\underline{a}_s(t)$ in the overlap region is zero, thus $\underline{A}_{s,r}(t) = 0$, $\underline{r}_1(t)$ and $\underline{r}_2(t)$ cannot be calculated directly from the Equations (1.20) and (1.21). In this case, we choose

$$(1.22) \qquad \underline{r}_1(t) = -\underline{r}_2(t) = \underline{r}(t) \, ,$$

where $\underline{r}(t)$ is an arbitrary reference signal, e.g., an auxiliary signal component such as time-harmonic pilot tones that fulfils the requirements of Equation (1.15) and (1.8).

As a result, the detection output signal 100 generated by the balanced photodetector comprises a signal which is proportional to the phase mismatch between the two tributary electromagnetic signals 20, 21, and which is otherwise independent of the targeted broadband electromagnetic $\underline{a}_s(t)$. The detection output signal 100 is fed to the control element which extracts the relevant information for the phase mismatch and uses it to drive the actuating element, which in turn generates the actuator drive signal 120 being configured to modify the tributary electromagnetic signals 20, 21 in the desired fashion.

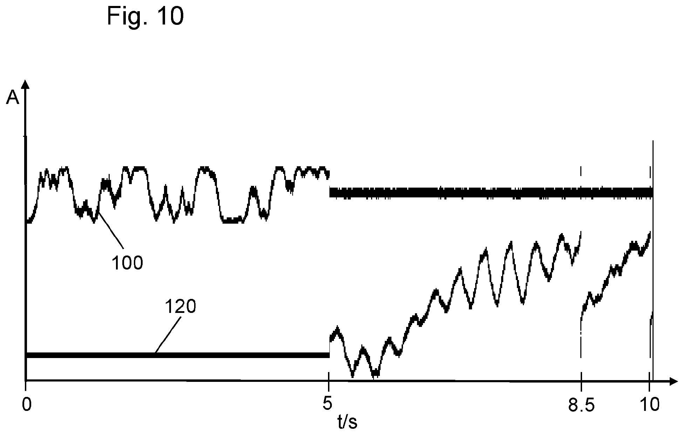

Figure 10 schematically illustrates a diagram illustrating a temporal evolution of an amplitude A of measured detection output signal 100 and actuator drive signal 120 over a period of time t during a proof-of-concept operation of the setup shown in Figure 8. A first set of signals illustrates the temporal course of the amplitude A of the detection output signal 100 as generated by the signal-detecting element 90 in Figure 8 and following the characteristic described in equation (1.16). Herein, a change in the amplitude A of the detection output signal 100 represents a change in the relative phase between the tributary electromagnetic signals 20, 21 at the signal-combining element 50. In the first period of time $t < 5$ s, the feedback control loop is disabled and the system is left to itself which can be recognized by an occurrence of phase fluctuations and corresponding fluctuations of the detection output signal 100 in the uncontrolled system. A further set of the signal shows the temporal course of the amplitude A of the actuator drive signal 120 which is configured to drive the actuating element 30 implemented here by using a phase shifter as described above in more detail. The amplitude A of the actuator drive signal 120 is maintained at a constant level in the first period of time $t < 5$ s, in particular, since the controlling element 110 is disabled the first period of time $t < 5$ s.

As further shown in Figure 10, the controlling element 110 is started into operation at a time $t < 5$ s. As a result, the amplitude A of the detection output signal 100 representing the change in the relative phase between the tributary electromagnetic signals 20, 21 can be observed to converge and to maintain at a constant level set by the controlling element 110. Further, the actions of the controlling element 110 can be observed by observing the temporal course of the amplitude A of the actuator drive signal 120 for the second period of time $t < 5$ s. As depicted there, the controlling element 110 is actively controlling the relative phase between the tributary electromagnetic signals 20, 21 in order to comply with the desired conditions. A limitation in the selected setup requires the apparatus 1 to reset the actuating element 30 after periods of time of approx. 8.5 s and 10 s, in particular, since the actuating element 30 which has been used for the proof-of-concept operation as illustrated in Figure 10 has a limited range. In an improved setup, the range of the actuating element 30 can be extended and may, thus, limit the phase fluctuations over a longer period of time, whereby one or more resets can be avoided. Further, using a so-denoted endless phase shifter can completely remove the limitations imparted by the currently used actuating element 30.

Figure 11 shows two diagrams each schematically illustrating a measurement taken from the setup as depicted in Figure 8, wherein Figure 11a illustrates a first measurement without phase stabilization, while Figure 11b illustrates a second measurement with phase stabilization. Herein, each measurement is based on the targeted electromagnetic signal 60 as generated by the signal-combining element 50, which has been recorded here by the optical spectrum analyzer OSA.

The proof-of-concept operation works with two tributary electromagnetic signals 20, 21 in the optical frequency range, wherein the two tributary electromagnetic signals 20, 21 overlap here only in a single frequency $f_0$ in the middle of the measured frequency range. The broadband content of the one tributary electromagnetic signal 20 is at higher frequencies while the broadband content of the other tributary electromagnetic signal 21 is at higher frequencies. The spectral overlap region between the both broadband contributions does not comprise any signal components of the targeted broadband electromagnetic signal such that auxiliary signals 230, 231 have to be added to each of the tributary electromagnetic signals 20, 21 to generate the detection output signal 100 which relies on interference of signal components occupying the same spectral range. This auxiliary signal components can be observed close to the frequency $f_0$ in the middle spectral overlap region between the two signal slices corresponding to the tributary electromagnetic signals 20, 21.

On one hand, Figure 11a shows high power levels for the interference tone but also a strong time variation which is not illustrated in this static image. On the other hand, Figure 11b shows a consistent low remaining signal power, validating that the phase control of the interference of the two tributary electromagnetic signals 20, 21 is in operation. Due to destructive interference of the tributary electromagnetic signals 20,21 at the output port associated with the targeted broadband electromagnetic signal, the residual impairment of the targeted broadband electromagnetic signal by the rather weak destructive superposition of the auxiliary signals 230, 231 can be kept low. This was verified by observing that the relative phase $\varphi(t)$ of the interference can be changed by using the controlling element 110 and that the observed signal level follows the expected behavior according to Eq. (1.16). Preferably, the power level of the residual auxiliary signal, that may occur as a consequence of an incomplete destructive superposition of the auxiliary signals 230, 231, may, preferably, be 10 dB, 20 dB, 30 dB, 40 dB, or 50 dB lower than the overall power of the combined electromagnetic signal.

In an exemplary embodiment, the optical arbitrary waveform generator (OAWG) as disclosed herein can be implemented in a photonic integrated chip (PIC) structure, thereby reducing its footprint as well as limiting unwanted effects arising from optical path mismatch and phase fluctuations. In a preferred implementation, the PIC OAWG can comprise electro-optic modulators, using one of the implementations discussed above.

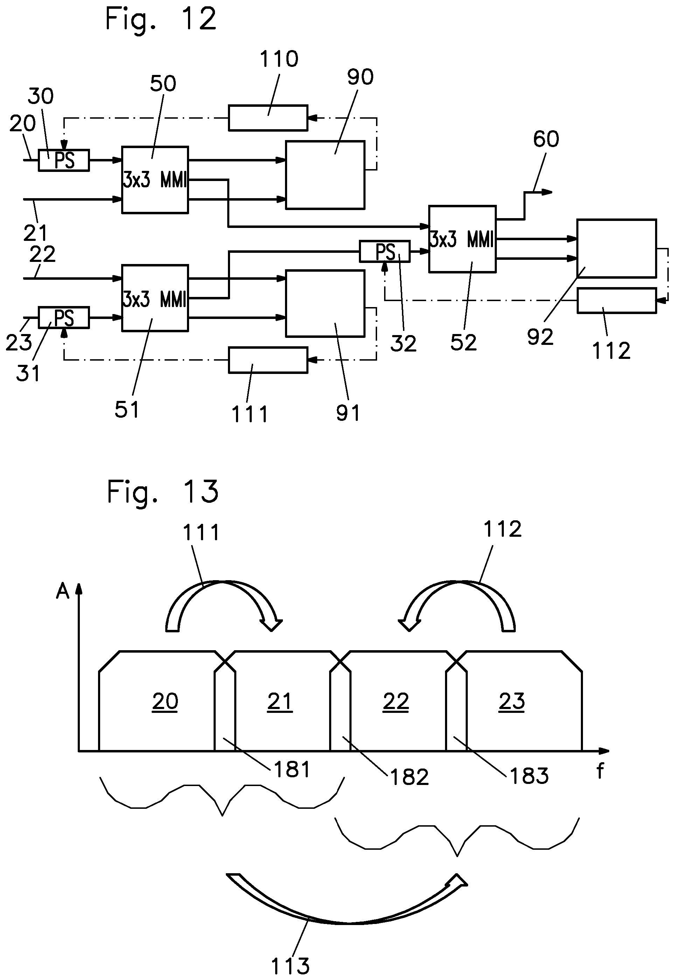

In a further exemplary embodiment, a four-slice OAWG can be implemented as a PIC structure, as depicted in Figure 12. Such a scheme is similar to the scheme used in the fiber-based setup, however, since there are four tributary electromagnetic signals, the interleaving process may require two steps, leading to a cascaded structure of the signal-combining elements 50, 51, 52. Exploiting the compactness of PIC, the OAWG as presented herein can be scaled up to larger number of tributary electromagnetic signals by using a higher number of cascaded stages. In the implementation shown in Fig. 12, three individual 3x3 MMIs are used as the signal-combining elements 50, 51, 52, wherein each 3x3 MMI is connected to a photodetector, which is implemented as a balanced pair of PIN diodes and which is acting as the corresponding signal-detecting element 90, 91, 92. The output signal of each photodetector is guided to a corresponding controlling element 110, 111, 112 located on a printed circuit board (PCB) attached to the photonic integrated circuit (PIC). The electrical connection between the PIC and the PCB can, preferably, be achieved here by electrically packaging the PIC, e.g., by wire-bonding of flip-chip bonding the outputs of the photodetectors to the controlling elements 110, 111, 112 on the PCB. Based on the corresponding detection output signal 100 from the balanced photodetector as the corresponding signal-detecting element 90, 91, 92, the corresponding controlling element 110, 111, 112 activates the corresponding actuating element 30, 31, 32, which may be a phase shifter being implemented on the PIC. In particular, the phase shifter can be implemented as a thermal phase shifter. Thermal phase shifters have a slow response time, mainly limited due to their slow cooling speed, but since most effects that lead to phase offsets between the tributary electromagnetic signals on PICs are relatively slow, this is ultimately not an issue - provided that the optical tones are derived from a phase-locked comb source and are hence not subject to strong relative phase drifts. Alternatively, the phase shifter can be implemented as an electro-optic phase shifter. The implementation of the controlling element on a PIC offers a particularly attractive path towards using endless phase shifters, that rely on more complex cascades for Mach-Zehnder type structures with phase shifters.

In a further exemplary embodiment, the input of the electro-optic modulators of the OAWG may be an optical signal as derived from an optical frequency comb OFC. The optical frequency comb OFC may be fed into an optical splitting element, which can, preferably, be implemented as a multimode interference (MMI) coupler or an arrayed waveguide grating. The optical frequency comb (OFC) going into the optical splitting element can be generated on-chip or be provided by an independent off-chip comb source. In particular, the OFC can be generated by using a Kerr-nonlinear ring-resonator structure, which may generate a Kerr comb. The OFC is guided to the optical splitting element and four discrete frequency components are chosen to be filtered out and to be individually forwarded to each electro-optic modulator. The bandwidth of the modulated signal may be larger than the free spectral range FSR of the optical frequency comb OFC, which leads to a spectral overlap between the frequencies of adjacent tributary electromagnetic signals.

The chip-scale implementation of the OAWG can be performed either in a single homogenous PIC or in a hybrid multi-chip module (MCM), wherein different components can be implemented using different wafer technologies, thereby exploiting the distinct advantages of the various implementations. As discussed above, in a hybrid approach, different PIC need to be combined and optically connected to one another - by precise alignment and/or by using 3D-printed optical coupling structures such as micro-lenses or photonic wire bonds.

Figure 13 schematically illustrates a diagram illustrating an exemplary embodiment of an amplitude A over a frequency f of four tributary electromagnetic signals 20, 21, 22, 23 having spectra that overlap at least partially. The tributary electromagnetic signals 20, 21, 22, 23 are arranged here according to an order of their frequency spectrum from left to right. As further depicted in Figure 13, the spectral arrangement of the signals leads to three spectral overlap regions 181, 182, 183, in which adjacent tributary electromagnetic signals may interfere and generate the detection output signals. The tributary electromagnetic signals 21, 22, 23, 24 are injected into the 3x3 MMIs in a fashion that the tributary electromagnetic signals 20 and 21, as well as the tributary electromagnetic signals 22 and 23, are paired together, respectively, see Figure 12.

In a first combining stage, the phase offset between the tributary electromagnetic signals 20 and 21 is compensated, such that the tributary electromagnetic signals 20 and 21 have the desired phase relationships, as indicated by the detection output signals 100 generated by interference of signal components in the spectral overlap region 181. As a consequence, signals 20, 21 produce the desired combined signal at the output of the signal-combining element 51. Herein, the compensation may be performed by using the phase shifter PS to act on the tributary electromagnetic signal 20 in order to match the phase of the tributary electromagnetic signal 21. Similarly, the tributary electromagnetic signals 22 and 23 have the desired phases as indicated by the detection output signals 110 generated by interference of signal components in the spectral overlap region 183. Again, the compensation may be performed by using the phase shifter PS to act on the tributary electromagnetic signal 22 in order to match the phase of the tributary electromagnetic signal 23. In the second combining stage, the phase shifter PS may act on the already combined tributary electromagnetic signals 20 and 21 in a fashion that the already combined tributary electromagnetic signals 20 and 21 are phase-matched to the already also combined tributary electromagnetic signals 22 and 23, thus leading to the desired overall waveform at the output 60 of the signal-combining element 53.

In this manner, the three feedback control loops can operate using the controlling elements 110, 111, 112 independently from each other and maintain the phase of all four tributary electromagnetic signals 20, 21, 22, 23 precisely aligned. However, this procedure is not limited to independent controlling elements 110, 111, 112. In an alternative embodiment, a feedback control loop may use controlling elements 110, 111, 112 which are driven in an interdependent fashion, thereby further improving the quality and the precision of the phase control.

The OAWG shown in Fig. 12 relies on 3x3 MMI as signal-combining elements - rather than on 90° optical hybrid as used in the implementation shown in Fig. 8. The mathematical description of this scheme can be developed similarly to the analysis described by Equations (1.1) - (1.22), replacing Equations (1.3) to (1.6) derived for the 90° optical hybrid by the corresponding relations for a 3x3 MMI,

$$(1.23) \qquad \underline{a}_0(t) = \frac{1}{\sqrt{3}}(\underline{a}_{s1}(t)e^{-j\pi} + \underline{a}_{s2}(t)e^{j\frac{\pi}{3}}),$$

$$(1.24) \qquad \underline{a}_1(t) = \frac{1}{\sqrt{3}}(\underline{a}_{s1}(t) + \underline{a}_{s2}(t)),$$

$$(1.25) \qquad \underline{a}_2(t) = \frac{1}{\sqrt{3}}(\underline{a}_{s1}(t)e^{j\frac{\pi}{3}} + \underline{a}_{s2}(t)e^{-j\pi}).$$

Herein, $\underline{a}_0(t)$ and $\underline{a}_2(t)$ are the input signals to the slow balanced photodetector used to synthesize the detection output signal, while $\underline{a}_1(t)$ is used as the broadband electromagnetic signal. In this configuration, the signal contributions $\underline{r}_1$

($t$) and $r_2(t)$ need to be engineered to fulfill the relation

$$(1.26) \qquad \underline{r}_1(t) + \underline{r}_2(t) = \sqrt{3}\, \underline{A}_s(t)$$

The detection output signal generated by the BPD is

$$(1.27) \qquad I(t) = -\frac{2}{3}\sqrt{3}\, \Im\left\{ \underline{a}_{s1}(t)\underline{a}_{s2}^*(t) e^{j\varphi(t)} \right\},$$

and $I_{BD}$ is defined as

$$(1.28) \qquad -I_{BD} = \frac{1}{\sqrt{3}} R \underline{r}_1(t) \underline{r}_2^*(t).$$

The detection output signal can thus be written as

$$(1.29) \qquad i_{fb}(t) = -2 I_{BD} \sin\big(\varphi(t)\big)$$

As before, we distinguish two cases for the signal contributions $\underline{r}_1(t)$ and $\underline{r}_2(t)$, based on the spectral content of the broadband signal $\underline{a}_s(t)$ in the overlap ranges 181, 182, 183. In case of non-zero signal content in the overlap range, $\underline{A}_{s,r}(t) \neq 0$, $\underline{r}_1(t)$ and $\underline{r}_2(t)$ are synthesized similarly as in the previous method,

$$(1.30) \qquad \underline{r}_1(t) = \frac{\sqrt{3}}{2}\left(1 + \sqrt{\frac{4 I_{BD}}{\sqrt{3} R \left|\underline{A}_{s,r}(t)\right|^2} + 1}\right) \underline{A}_{s,r}(t)$$

$$(1.31) \qquad \underline{r}_2(t) = \frac{\sqrt{3}}{2}\left(1 - \sqrt{\frac{4 I_{BD}}{\sqrt{3} R \left|\underline{A}_{s,r}(t)\right|^2} + 1}\right) \underline{A}_{s,r}(t).$$

In case the signal content of $\underline{a}_s(t)$ in the overlap region is zero, i.e., $\underline{A}_{s,r}(t) = 0$, $\underline{r}_1(t)$ and $\underline{r}_2(t)$ are chosen as

$$(1.32) \qquad \underline{r}_1(t) = -\underline{r}_2(t) = \underline{r}(t)$$

while fulfilling requirements of Equation (1.28) and (1.26).

By using the feedback current signal $i_{fb}(t)$, the phase mismatch between pairs of spectrally overlapping tributary electromagnetic signals 20, 21, 22, 23, and finally 21, 22, see Figure 13, can be monitored and, accordingly, be corrected by using the phase-shifters 30, 31, 32 as the actuating element 30, see Fig. 12. In this manner, all four tributary electromagnetic signals 20, 21, 22, 23 having the correct phase can be combined in order to generate the targeted broadband electromagnetic signal 60.

In an alternative embodiment, the various tributary spectra can have more substantial overlaps or even individually cover the full range of the target broadband electromagnetic waveform. Such broadband tributary electromagnetic signals can be generated by simultaneously modulating a multitude of two or more continuous-wave (cw) electromagnetic tones with the same modulation signal. In this embodiment, the apparatus 1 can be configured to comprise at least one frequency-comb generator 240 that produces at least two continuous-wave electromagnetic tones 250, 251, at least a first electromagnetic signal generator 10 configured to generated at least a first tributary electromagnetic signal by jointly modulating the two continuous-wave electromagnetic tones 250, 251 with a first modulation signal, and at least a second electromagnetic signal generator 11 configured to generate at least a second tributary electromagnetic signal by jointly modulating the two continuous-wave electromagnetic tones 250, 251 with a second modulation signal. The two tones 250, 251 and/or the at least two tributary electromagnetic signals as generated in this matter are subjected to different frequency-dependent transfer functions prior to being modulated by the electromagnetic signal generator or prior to being superimposed by the signal-combining element.

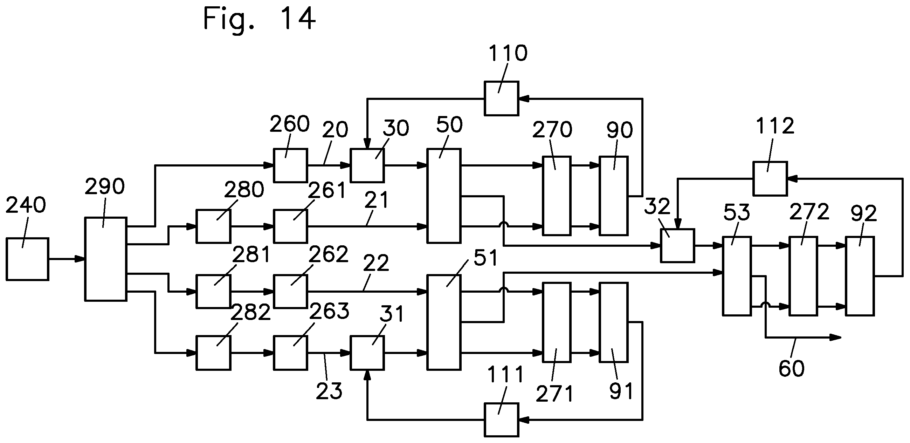

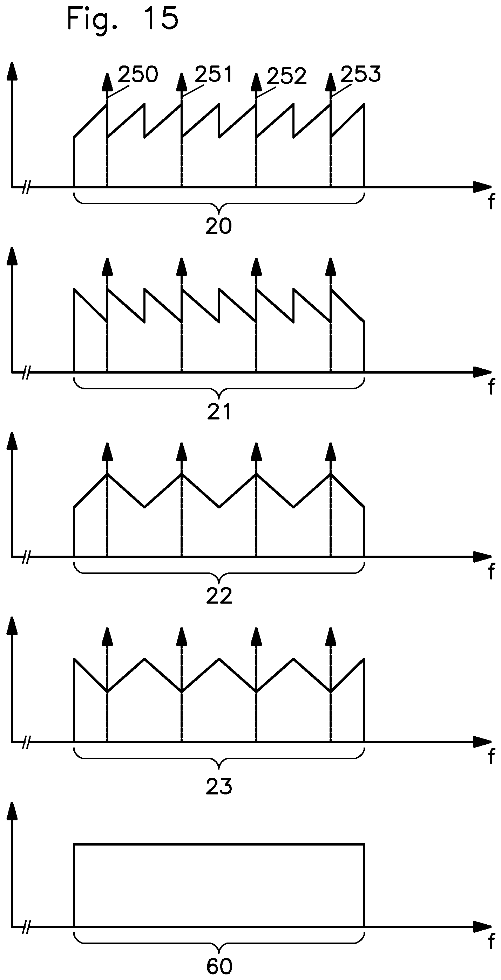

Examples of such embodiments are schematically illustrated in Figures 14 and 15. In the illustrated examples, the four tributary electromagnetic signals are optical signals and are generated by modulating four differently delayed copies of the output of an optical frequency-comb generator 240 providing four continuous-wave electromagnetic tones 250, 251, 252, 253.

In the implementation as schematically illustrated in Figure 14, the optical frequency comb is split in four copies by a power splitter 290, and the delays are then provided by a multitude of delay elements 280, 281, 282, that may be implemented by fixed or tunable optical delay lines. The modulation is provided by four optical in-phase/quadrature (I/Q) modulators 260, 261, 262, 263 that are part of the corresponding electromagnetic signal generators for the tributary electromagnetic signals. The tributary electromagnetic signals are then superimposed by an implementation of the apparatus similarly to the one shown in Fig. 12. The modulation signals are chosen such that the superposition of the four signals at the output of the apparatus leads to the desired targeted broadband electromagnetic waveform 60. The relative phases and amplitudes by which the tributary electromagnetic signals are superimposed are, again, maintained by control loops that rely on detection output signals 100 being derived from pair of outputs of MMI-based signal-combining elements 50, 51, 52. In a preferred embodiment, optional optical filters 270, 271, 272 are inserted between the output of the signal-combining elements 50, 51, 52 and the corresponding signal-detection element 90, 91, 92. Clearly, other signal-combining elements may also be used. In a preferred embodiment, the relative delay between the four copies of the comb-generator output amounts to approximately T = 1/(4 x FSR), where FSR corresponds to the free spectral range of the comb source.

Fig. 15 schematically illustrates the spectra of the tributary electromagnetic signals 20, 21, 22, 23, each of which covers the full bandwidth of the targeted broadband electromagnetic waveform. These tributary electromagnetic signals are generated by modulating the continuous-wave electromagnetic tones 250, 252, 252, 253 generated by the frequency-comb generator 240. This scheme can be generalized to larger numbers of tributary electromagnetic signals, in which case the delays need to be adapted accordingly.

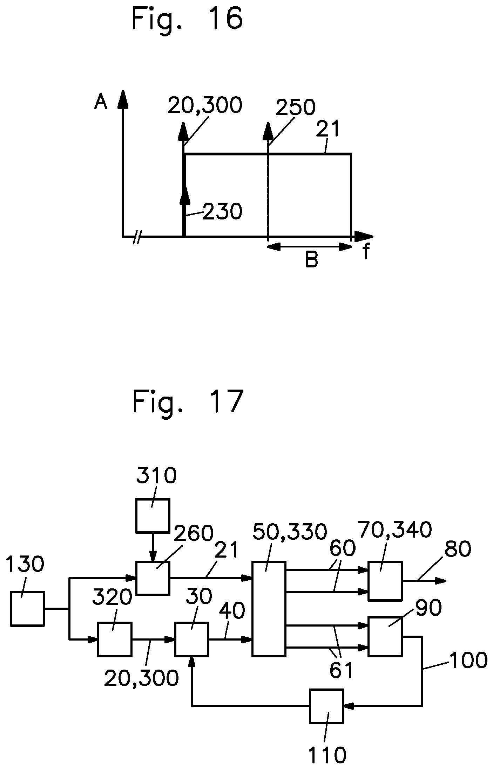

In an alternative embodiment of the present invention, the phase control loop is used to adjust the relative phase and/or amplitude of one optical frequency tone 300, used as a local oscillator tone, and a broadband tributary optical signal 21, as schematically illustrated in Figures 16 and 17. Accordingly, the broadband tributary optical signal 21 is generated here by modulating a continuous-wave electromagnetic tone 250 using an IQ modulator 260, which is driven by an electrical waveform generator 310 with a limited DAC bandwidth $\mathscr{B}$. In the depicted implementation, the local oscillator tone 300 is derived from the same common electromagnetic signal source 130, specifically the same laser, as the continuous-wave electromagnetic tone 250 and is shifted in frequency by a frequency shifter 320 to be positioned at the edge of the frequency spectrum of the broadband tributary optical signal 21. The local-oscillator tone 300 is used here to down-convert the broadband tributary optical signal 21 or a portion thereof into the electrical baseband signal in a heterodyne reception scheme using a 90° optical hybrid 330, which acts as the combination element 50, and a broadband balanced photodetector 340, which acts as the conversion element 70 and which provides an electro-optical bandwidth of at least $2\mathscr{B}$. The optical hybrid has four outputs, wherein two outputs provide the broadband electrical signals 60 to the broadband balanced photodetector 340 and two further outputs provide the combined electromagnetic signals 61 to the detection unit 90. The two combined electromagnetic signals 61 provided to the detection unit 90, which is embodied in this example by a low-speed balanced photodetector, are used to generate a narrowband detection output signal 100. The detection output signal 100 is, subsequently, introduced into the control unit 110, which drives an optical phase shifter acting as the actuation element 30 to maintain a stable relative phase relation between the local oscillator and the optical signal. The frequency spectrum of the optical signal and the local oscillator is depicted in Figure 16. By down-converting the optical signal 21 or a portion thereof using the phase-corrected local oscillator tone 40 and the quadratic characteristic of the photodetector 340, a converted output waveform 80 of the broadband electrical signal 60, wherein the converted output waveform 80 has a bandwidth of $2\mathscr{B}$, is obtained, thereby doubling a useable electrical bandwidth $\mathscr{B}$ of the electrical waveform generator. In a preferred version of this embodiment, a narrow frequency tone can be added as an auxiliary signal 230 to the broadband optical signal at the same frequency where the local oscillator tone is placed. In combination with the local-oscillator tone, this auxiliary tone 230, in particular, allows for a precise control of the relative phase between the local oscillator tone and the broadband optical signal 60.

List of Reference Signs

| 1 | apparatus |
|---|---|
| 2 | system |

| | |
|---|---|
| 3 | (photonic) integrated circuit |
| 10, 11 | electromagnetic signal generator |
| 20, 20-1, ...20-*N*, 21, 22, 23 | tributary electromagnetic signal |
| 30, 30-1, ...30-*L*, 31, 32 | actuating element |
| 40 | compensated tributary electromagnetic signal |
| 41-1 ... 41-*N* | input signal of the signal-combining element |
| 50, 51, 52 | signal-combining element |
| 60 | targeted broadband electromagnetic signal |
| 61, 61-1, ...61-*K*, 62, 63 | combined electromagnetic signal |
| 70 | conversion element |
| 80 | converted output waveform |
| 90, 91, 92 | signal-detecting element |
| 100, | detection output signal |
| 110, 111, 112 | controlling element |
| 120, 121 | actuator drive signal |
| 130 | common electromagnetic signal source |
| 140, 141 | reference signal |
| 150, 151, 152, 153 | first-stage apparatus |
| 160, 161 | second-stage apparatus |
| 170 | third-stage apparatus |
| 180, 181, 182, 183 | overlap ranges |
| 190, 191, 192 | input port |
| 200 | method |
| 205 | providing step |
| 210 | merging step |
| 215 | detecting step |
| 220 | modifying step |
| 230, 231 | auxiliary signal |
| 240 | frequency-comb generator |
| 250, 251, 252, 253 | continuous-wave electromagnetic tone |
| 260, 261, 262, 263 | optical in-phase/quadrature (I/Q) modulator |
| 270, 271, 272 | optical filter |
| 280, 281, 282 | delay element |
| 290 | power splitter |
| 300 | local-oscillator tone |
| 310 | electrical waveform generator |
| 320 | frequency shifter |
| 330 | 90° optical hybrid |
| 340 | broadband balanced photodetector |

**Claims**

1. An apparatus (1) for synthesizing at least one targeted broadband electromagnetic signal (60), comprising

   - at least two electromagnetic signal generators (10, 11), wherein the electromagnetic signal generators (10, 11) are configured to provide at least two tributary electromagnetic signals having spectra that overlap at least partially;
   - at least one signal-combining element (50), wherein the at least one signal-combining element (50) is configured to merge the at least two tributary electromagnetic signals into at least one combined electromagnetic signal;
   - at least one signal-detecting element (90), wherein the at least one signal-detecting element (90) is configured to generate at least one detection output signal (100) by detecting at least a portion of at least one of the at least one combined electromagnetic signal;
   - at least one controlling element (110), wherein the at least one controlling element (110) is configured to extract signal information about at least one of a relative amplitude or a relative phase with which the at least two tributary electromagnetic signals are merged into the at least one combined electromagnetic signal from the at least one detection output signal (100);
   - at least one actuating element (30), wherein the at least one actuating element (30) is configured to modify at least one of the amplitude or the phase of at least one of the at least two tributary electromagnetic signals based on the signal information,

wherein modifying the at least one of the amplitude or the phase of the at least one of the at least two tributary electromagnetic signals is performed in a manner that at least one of the at least one combined electromagnetic signal corresponds to the at least one targeted broadband electromagnetic signal (60).

2. The apparatus (1) according to the preceding claim, wherein the at least one signal-combining element (50) has at least one first output port and at least one second output port, wherein the at least one targeted broadband electromagnetic signal (60) is provided at the at least one first output port, and wherein at least a portion of the at least one combined electromagnetic signal (61) is provided by the at least one second output port to the at least one signal-detecting element (90).

3. The apparatus (1) according to any one of the preceding claims, wherein at least one of

   - at least one of the at least one actuating element (30) is at least partially integrated into at least one of the at least two electromagnetic signal generators (10, 11); or
   - at least one of the at least one actuating element (30) is at least partially integrated into at least one of the at least one signal-combining element (50); or
   - at least one of the at least one signal-detecting element (90) is at least partially integrated into at least one of the at least one signal-combining elements (50).

4. The apparatus (1) according to any one of the preceding claims, wherein at least one of

   - at least one of the at least one actuating element (30) and at least one of the at least one signal-combining element (50); or
   - at least one of the at least one signal-detecting element (90) and at least one of the at least one signal-combining elements (50); or
   - at least one of the at least one actuating element (30) and at least one of the at least one signal-detecting element (90); or
   - at least one of the at least one actuating element (30), at least one of the at least one signal-combining element (50), and at least one of the at least one signal-detecting element (90)

   are implemented together in at least one photonic integrated circuit (3).

5. The apparatus (1) according to any one of the preceding claims, wherein the at least one actuating element (30) is selected from at least one of:

   - a piezo-electric actuator;
   - a photonic integrated circuit (3); or
   - an endless phase shifter.

6. The apparatus (1) according to any one of the preceding claims, wherein the at least one signal-combining element (50) comprises at least one of:

   - a multi-mode interference (MMI) coupler or a network thereof;
   - a directional coupler or a network thereof; or
   - a network of ring resonators.

7. The apparatus (1) according to any one of the preceding claims, wherein the at least one signal-detecting element (90) comprises a balanced photodetector.

8. The apparatus (1) according to any one of the preceding claims, wherein at least one of the electromagnetic signal generators (10) is configured to shape at least a spectral fraction of at least one tributary electromagnetic signal in the spectral overlap region with at least one other tributary electromagnetic signal in a manner that a feedback signal generated by interference of the two tributary electromagnetic signals is independent of the targeted broadband electromagnetic signal (60).

9. The apparatus (1) according to any one of the preceding claims, wherein at least a first of the at least two tributary electromagnetic signals is a broadband electromagnetic signal, and wherein a second of the at least two tributary electromagnetic signals is a single optical frequency tone which is configured to act as a local oscillator tone for frequency down-conversion.

10. The apparatus (1) according to any one of the preceding claims, wherein at least one of the at least two electromagnetic signal generators (10, 11) is configured to generate the at least one of the at least two tributary electromagnetic signals by modulating at least one of a single tone or multiple tones of an optical frequency comb.

11. The apparatus (1) according to any one of the preceding claims, further comprising at least one frequency-comb generator (240), wherein the at least one frequency-comb generator (240) is configured to generate at least two continuous-wave electromagnetic tones (250, 251), wherein at least one first electromagnetic signal generator (10) is configured to generate at least one first tributary electromagnetic signal by jointly modulating the at least two continuous-wave electromagnetic tones (250, 251) with a first modulation signal, wherein at least one second electromagnetic signal generator (11) is configured to generate at least one second tributary electromagnetic signal by jointly modulating the at least two continuous-wave electromagnetic tones (250, 251) with a second modulation signal, and wherein the two resulting tributary electromagnetic signals are superimposed by the signal-combining element (50).

12. A system (2) for synthesizing at least one targeted broadband electromagnetic signal (60), the system (2) comprising a plurality of apparatuses (1) according to any one of the preceding claims, wherein the plurality of the apparatuses (1) are arranged in a cascaded manner.

13. The apparatus (1) or the system (2) according to any one of the preceding claims, further comprising at least one signal-conversion element (70), wherein the at least one signal-conversion element (70) is configured to convert at least a portion of the at least one targeted broadband electromagnetic signal (60) into a converted electromagnetic waveform.

14. A method (200) for synthesizing at least one targeted broadband electromagnetic signal (60), the method (200) comprising the following steps:

a) providing at least two tributary electromagnetic signals having spectra that overlap at least partially;
b) merging the at least two tributary electromagnetic signals into at least one combined electromagnetic signal;
c) detecting at least a portion of at least one of the at least one combined electromagnetic signal and extracting signal information about at least one of a relative amplitude or a relative phase with which the at least two tributary electromagnetic signals are merged into the at least one combined electromagnetic signal; and
d) modifying at least one of the amplitude or the phase of at least one of the at least two tributary electromagnetic signals based on the signal information,

wherein modifying the at least one of the amplitude or the phase of the at least one of the at least two tributary electromagnetic signals is performed in a manner that at least one of the at least one the combined electromagnetic signal corresponds to the at least one targeted broadband electromagnetic signal (60).

15. A computer program for synthesizing at least one targeted broadband electromagnetic signal (60), wherein the computer program comprises instructions which, when the program is executed by a computer, cause the apparatus of claim 1 to carry out the method (200) according to the preceding claim.

**Patentansprüche**

1. Vorrichtung (1) zum Synthetisieren mindestens eines angestrebten elektromagnetischen Breitbandsignals (60), umfassend:

- mindestens zwei elektromagnetische Signalgeneratoren (10, 11), wobei die elektromagnetischen Signalgeneratoren (10, 11) dazu eingerichtet sind, mindestens zwei elektromagnetische Zubringersignale mit Spektren, die sich mindestens teilweise überlappen, bereitzustellen;
- mindestens ein Signalkombinationselement (50), wobei das mindestens eine Signalkombinationselement (50) dazu eingerichtet ist, die mindestens zwei elektromagnetischen Zubringersignale zu mindestens einem kombinierten elektromagnetischen Signal zusammenzuführen;

- mindestens ein Signaldetektionselement (90), wobei das mindestens eine Signaldetektionselement (90) dazu eingerichtet ist, mindestens ein Detektionsausgangssignal (100) durch Detektieren mindestens eines Teils mindestens eines des mindestens einen kombinierten elektromagnetischen Signals zu erzeugen;

- mindestens ein Steuerelement (110), wobei das mindestens eine Steuerelement (110) dazu eingerichtet ist, Signalinformationen über eine relative Amplitude und/oder eine relative Phase, womit die mindestens zwei elektromagnetischen Zubringersignale zu dem mindestens einen kombinierten elektromagnetischen Signal zusammengeführt werden, aus dem mindestens einen Detektionsausgangssignal (100), zu extrahieren;

- mindestens ein Betätigungselement (30), wobei das mindestens eine Betätigungselement (30) dazu eingerichtet ist, die Amplitude und/oder die Phase mindestens eines der mindestens zwei elektromagnetischen Zubringersignale auf der Basis der Signalinformationen zu modifizieren,

wobei Modifizieren der Amplitude und/oder der Phase des mindestens einen der mindestens zwei elektromagnetischen Zubringersignale derart durchgeführt wird, dass mindestens eines des mindestens einen kombinierten elektromagnetischen Signals dem mindestens einen angestrebten elektromagnetischen Breitbandsignal entspricht (60).

2. Vorrichtung (1) nach dem vorhergehenden Anspruch, wobei das mindestens eine Signalkombinationselement (50) mindestens einen ersten Ausgangsport und mindestens einen zweiten Ausgangsport aufweist, wobei das mindestens eine angestrebte elektromagnetische Breitbandsignal (60) an dem mindestens einen ersten Ausgangsport bereitgestellt wird, und wobei mindestens ein Teil des mindestens einen kombinierten elektromagnetischen Signals (61) durch den mindestens einen zweiten Ausgangsport dem mindestens einen Signaldetektionselement (90) zugeführt wird.

3. Vorrichtung (1) nach einem der vorhergehenden Ansprüche, wobei

- mindestens eines des mindestens einen Betätigungselements (30) mindestens teilweise in mindestens einen der mindestens zwei elektromagnetischen Signalgeneratoren (10, 11) integriert ist; und/oder
- mindestens eines des mindestens einen Betätigungselements (30) mindestens teilweise in mindestens eines des mindestens einen Signalkombinationselements (50) integriert ist; und/oder
- mindestens eines des mindestens einen Signaldetektionselements (90) mindestens teilweise in mindestens eines des mindestens einen Signalkombinationselements (50) integriert ist.

4. Vorrichtung (1) nach einem der vorhergehenden Ansprüche, wobei

- mindestens eines des mindestens einen Betätigungselements (30) und mindestens eines des mindestens einen Signalkombinationselements (50); und/oder
- mindestens eines des mindestens einen Signaldetektionselements (90) und mindestens eines des mindestens einen Signalkombinationselements (50); und/oder
- mindestens eines des mindestens einen Betätigungselements (30) und mindestens eines des mindestens einen Signaldetektionselements (90); und/oder
- mindestens eines des mindestens einen Betätigungselements (30), mindestens eines des mindestens einen Signalkombinationselements (50) und mindestens eines des mindestens einen Signaldetektionselements (90)

zusammen in mindestens einer photonischen integrierten Schaltung (3) implementiert sind.

5. Vorrichtung (1) nach einem der vorhergehenden Ansprüche, wobei das mindestens eine Betätigungselement (30) aus mindestens einem von Folgendem ausgewählt ist:

- einem piezoelektrischen Stellglied;
- einer photonischen integrierten Schaltung (3); oder
- einem Endlos-Phasenschieber.

6. Vorrichtung (1) nach einem der vorhergehenden Ansprüche, wobei das mindestens eine Signalkombinationselement (50) mindestens eines von Folgendem umfasst:

- einen Multimode-Interferenz- bzw. MMI-Koppler oder ein Netzwerk davon;
- einen Richtkoppler oder ein Netzwerk davon; oder
- ein Netzwerk von Ringresonatoren.

7. Vorrichtung (1) nach einem der vorhergehenden Ansprüche, wobei das mindestens eine Signaldetektionselement (90) einen symmetrischen Photodetektor umfasst.

8. Vorrichtung (1) nach einem der vorhergehenden Ansprüche, wobei mindestens einer der elektromagnetischen Signalgeneratoren (10) dazu eingerichtet ist, mindestens einen Spektralanteil mindestens eines elektromagnetischen Zubringersignals in dem spektralen Überlappungsbereich mit mindestens einem anderen elektromagnetischen Zubringersignal derart zu formen, dass ein durch Interferenz der zwei elektromagnetischen Zubringersignale erzeugtes Rückkopplungssignal unabhängig von dem angestrebten elektromagnetischen Breitbandsignal (60) ist.

9. Vorrichtung (1) nach einem der vorhergehenden Ansprüche, wobei mindestens ein erstes der mindestens zwei elektromagnetischen Zubringersignale ein elektromagnetisches Breitbandsignal ist und wobei ein zweites der mindestens zwei elektromagnetischen Zubringersignale ein einzelner optischer Frequenzton ist, der dazu eingerichtet ist, als ein Lokaloszillatorton zur Frequenzabwärtsumwandlung zu wirken.

10. Vorrichtung (1) nach einem der vorhergehenden Ansprüche, wobei mindestens einer der mindestens zwei elektromagnetischen Signalgeneratoren (10, 11) dazu eingerichtet ist, das mindestens eine der mindestens zwei elektromagnetischen Zubringersignale durch Modulieren eines einzelnen Tons und/oder mehrerer Töne eines optischen Frequenzkammes zu erzeugen.

11. Vorrichtung (1) nach einem der vorhergehenden Ansprüche, ferner umfassend: mindestens einen Frequenzkammgenerator (240), wobei der mindestens eine Frequenzkammgenerator (240) dazu eingerichtet ist, mindestens zwei elektromagnetische Dauerstrichtöne (250, 251) zu erzeugen, wobei mindestens ein erster elektromagnetischer Signalgenerator (10) dazu eingerichtet ist, mindestens ein erstes elektromagnetisches Zubringersignal durch gemeinsames Modulieren der mindestens zwei elektromagnetischen Dauerstrichtöne (250, 251) mit einem ersten Modulationssignal zu erzeugen, wobei mindestens ein zweiter elektromagnetischer Signalgenerator (11) dazu eingerichtet ist, mindestens ein zweites elektromagnetisches Zubringersignal durch gemeinsames Modulieren der mindestens zwei elektromagnetischen Dauerstrichtöne (250, 251) mit einem zweiten Modulationssignal zu erzeugen, und wobei die zwei resultierenden elektromagnetischen Zubringersignale durch das Signalkombinationselement (50) überlagert werden.

12. System (2) zum Synthetisieren mindestens eines angestrebten elektromagnetischen Breitbandsignals (60), wobei das System (2) mehrere Vorrichtungen (1) nach einem der vorhergehenden Ansprüche umfasst, wobei die mehreren Vorrichtungen (1) kaskadiert angeordnet sind.

13. Vorrichtung (1) oder System (2) nach einem der vorhergehenden Ansprüche, ferner umfassend: mindestens ein Signalumwandlungselement (70), wobei das mindestens eine Signalumwandlungselement (70) dazu eingerichtet ist, mindestens einen Teil des mindestens einen angestrebten elektromagnetischen Breitbandsignals (60) in eine umgewandelte elektromagnetische Wellenform umzuwandeln.

14. Verfahren (200) zum Synthetisieren mindestens eines angestrebten elektromagnetischen Breitbandsignals (60), wobei das Verfahren (200) die folgenden Schritte umfasst:

   a) Bereitstellen von mindestens zwei elektromagnetischen Zubringersignalen mit Spektren, die sich mindestens teilweise überlappen;
   b) Zusammenführen der mindestens zwei elektromagnetischen Zubringersignale zu mindestens einem kombinierten elektromagnetischen Signal;
   c) Detektieren mindestens eines Teils mindestens eines des mindestens einen kombinierten elektromagnetischen Signals und Extrahieren von Signalinformationen über eine relative Amplitude und/oder eine relative Phase, womit die mindestens zwei elektromagnetischen Zubringersignale zu dem mindestens einen kombinierten elektromagnetischen Signal zusammengeführt werden; und
   d) Modifizieren der Amplitude und/oder der Phase mindestens eines der mindestens zwei elektromagnetischen Zubringersignale auf Basis der Signalinformationen,

   wobei Modifizieren der Amplitude und/oder der Phase des mindestens einen der mindestens zwei elektromagnetischen Zubringersignale derart durchgeführt wird, dass mindestens eines des mindestens einen kombinierten elektromagnetischen Signals dem mindestens einen angestrebten elektromagnetischen Breitbandsignal entspricht (60).

**15.** Computerprogramm zum Synthetisieren mindestens eines angestrebten elektromagnetischen Breitbandsignals (60), wobei das Computerprogramm Anweisungen umfasst, die, wenn das Programm durch einen Computer ausgeführt wird, die Vorrichtung nach Anspruch 1 veranlassen, das Verfahren (200) nach dem vorhergehenden Anspruch auszuführen.

## Revendications

**1.** Appareil (1) pour synthétiser au moins un signal électromagnétique à large bande ciblé (60), comprenant

- au moins deux générateurs de signaux électromagnétiques (10, 11), dans lequel les générateurs de signaux électromagnétiques (10, 11) sont configurés pour fournir au moins deux signaux électromagnétiques tributaires ayant des spectres qui se chevauchent au moins partiellement ;
- au moins un élément de combinaison de signaux (50), dans lequel l'au moins un élément de combinaison de signaux (50) est configuré pour combiner les au moins deux signaux électromagnétiques tributaires en au moins un signal électromagnétique combiné ;
- au moins un élément de détection de signaux (90), dans lequel l'au moins un élément de détection de signaux (90) est configuré pour générer au moins un signal de sortie de détection (100) en détectant au moins une partie d'au moins l'un parmi l'au moins un signal électromagnétique combiné ;
- au moins un élément de contrôle (110), dans lequel l'au moins un élément de contrôle (110) est configuré pour extraire de l'au moins un signal de sortie de détection (100) des informations de signal concernant au moins l'une parmi une amplitude relative ou une phase relative avec laquelle les au moins deux signaux électromagnétiques tributaires sont fusionnés en l'au moins un signal électromagnétique combiné ;
- au moins un élément d'actionnement (30), dans lequel l'au moins un élément d'actionnement (30) est configuré pour modifier au moins l'une parmi l'amplitude ou la phase d'au moins l'un des au moins deux signaux électromagnétiques tributaires sur la base des informations de signal,

dans lequel la modification de l'au moins une parmi l'amplitude ou la phase d'au moins l'un des au moins deux signaux électromagnétiques tributaires est effectuée de manière à ce qu'au moins l'un parmi l'au moins un signal électromagnétique combiné corresponde à l'au moins un signal électromagnétique à large bande ciblé (60).

**2.** Appareil (1) selon la revendication précédente, dans lequel l'au moins un élément de combinaison de signaux (50) possède au moins un premier port de sortie et au moins un second port de sortie, dans lequel le signal électromagnétique à large bande ciblé (60) est fourni au niveau de l'au moins un premier port de sortie, et dans lequel au moins une partie de l'au moins un signal électromagnétique combiné (61) est fournie par l'au moins un second port de sortie à l'au moins un élément de détection de signaux (90).

**3.** Appareil (1) selon l'une quelconque des revendications précédentes, dans lequel au moins l'un parmi

- au moins l'un parmi l'au moins un élément d'actionnement (30) est au moins partiellement intégré dans au moins l'un des au moins deux générateurs de signaux électromagnétiques (10, 11) ; ou
- au moins l'un parmi l'au moins un élément d'actionnement (30) est au moins partiellement intégré dans au moins l'un parmi l'au moins un élément de combinaison de signaux (50) ; ou
- au moins l'un parmi l'au moins un élément de détection de signaux (90) est au moins partiellement intégré dans au moins l'un parmi l'au moins un élément de combinaison de signaux (50).

**4.** Appareil (1) selon l'une quelconque des revendications précédentes, dans lequel au moins l'un parmi

- au moins l'un parmi l'au moins un élément d'actionnement (30) et au moins l'un parmi l'au moins un élément de combinaison de signaux (50) ; ou
- au moins l'un parmi l'élément de détection de signaux (90) et au moins l'un parmi l'au moins un élément de combinaison de signaux (50) ; ou
- au moins l'un parmi l'au moins un élément d'actionnement (30) et au moins l'un parmi l'au moins un élément de détection de signal (90) ; ou
- au moins l'un parmi l'élément d'actionnement (30), au moins l'un parmi l'au moins un élément de combinaison de signaux (50) et au moins l'un parmi l'au moins un élément de détection de signaux (90)

sont mis en œuvre ensemble dans au moins un circuit intégré photonique (3).

**5.** Appareil (1) selon l'une quelconque des revendications précédentes, dans lequel l'au moins un élément d'actionnement (30) est choisi parmi au moins l'un :

- d'un actionneur piézoélectrique ;
- d'un circuit intégré photonique (3) ; ou
- d'un déphaseur sans fin.

**6.** Appareil (1) selon l'une quelconque des revendications précédentes, dans lequel l'au moins un élément de combinaison de signaux (50) comprend au moins l'un parmi :

- un coupleur à interférence multimode (MMI) ou un réseau de ceux-ci ;
- un coupleur directionnel ou un réseau de ceux-ci ; ou
- un réseau de résonateurs en anneau.

**7.** Appareil (1) selon l'une quelconque des revendications précédentes, dans lequel l'au moins un élément de détection de signaux (90) comprend un photodétecteur équilibré.

**8.** Appareil (1) selon l'une quelconque des revendications précédentes, dans lequel au moins l'un des générateurs de signaux électromagnétiques (10) est configuré pour mettre en forme au moins une fraction spectrale d'au moins un signal électromagnétique tributaire dans la région de chevauchement spectral avec au moins un autre signal électromagnétique tributaire de manière à ce qu'un signal de rétroaction généré par l'interférence des deux signaux électromagnétiques tributaires soit indépendant du signal électromagnétique à large bande ciblé (60).

**9.** Appareil (1) selon l'une quelconque des revendications précédentes, dans lequel au moins un premier des au moins deux signaux électromagnétiques tributaires est un signal électromagnétique à large bande, et dans lequel un second des au moins deux signaux électromagnétiques tributaires est une tonalité monofréquence optique qui est configurée pour jouer le rôle d'une tonalité d'oscillateur local pour une conversion par abaissement de fréquence.

**10.** Appareil (1) selon l'une quelconque des revendications précédentes, dans lequel au moins l'un des au moins deux générateurs de signaux électromagnétiques (10, 11) est configuré pour générer au moins l'un des au moins deux signaux électromagnétiques tributaires en modulant au moins l'une d'une tonalité unique ou de tonalités multiples d'un peigne de fréquences optique.

**11.** Appareil (1) selon l'une quelconque des revendications précédentes, comprenant en outre au moins un générateur de peigne de fréquences (240), dans lequel l'au moins un générateur de peigne de fréquences (240) est configuré pour générer au moins deux tonalités électromagnétiques à onde continue (250, 251), dans lequel au moins un premier générateur de signaux électromagnétiques (10) est configuré pour générer au moins un premier signal électromagnétique tributaire en modulant conjointement les au moins deux tonalités électromagnétiques à ondes continues (250, 251) avec un premier signal de modulation, dans lequel au moins un second générateur de signaux électromagnétiques (11) est configuré pour générer au moins un second signal électromagnétique tributaire en modulant conjointement les au moins deux tonalités électromagnétiques à onde continue (250, 251) avec un second signal de modulation, et dans lequel les deux signaux électromagnétiques tributaires résultants sont superposés par l'élément de combinaison de signaux (50).

**12.** Système (2) pour synthétiser au moins un signal électromagnétique à large bande ciblé (60), le système (2) comprenant une pluralité d'appareils (1) selon l'une quelconque des revendications précédentes, dans lequel la pluralité d'appareils (1) sont agencés en cascade.

**13.** Appareil (1) ou système (2) selon l'une quelconque des revendications précédentes, comprenant en outre au moins un élément de conversion de signaux (70), dans lequel l'au moins un élément de conversion de signaux (70) est configuré pour convertir au moins une partie de l'au moins un signal électromagnétique à large bande ciblé (60) en une forme d'onde électromagnétique convertie.

**14.** Procédé (200) pour synthétiser au moins un signal électromagnétique à large bande ciblé (60), le procédé (200) comprenant les étapes suivantes consistant à :

a) fournir au moins deux signaux électromagnétiques tributaires ayant des spectres qui se chevauchent au moins partiellement ;

b) fusionner les au moins deux signaux électromagnétiques tributaires en au moins un signal électromagnétique combiné ;

c) détecter au moins une partie d'au moins un signal électromagnétique combiné et extraire des informations de signal concernant au moins l'une parmi une amplitude relative ou une phase relative avec laquelle les au moins deux signaux électromagnétiques tributaires sont fusionnés en l'au moins un signal électromagnétique combiné ; et

d) modifier au moins l'amplitude ou la phase d'au moins l'un des au moins deux signaux électromagnétiques tributaires sur la base des informations de signal,

dans lequel la modification de l'au moins une parmi l'amplitude ou la phase d'au moins l'un des au moins deux signaux électromagnétiques tributaires est effectuée de manière à ce qu'au moins l'un parmi l'au moins un signal électromagnétique combiné corresponde à l'au moins un signal électromagnétique à large bande ciblé (60).

15. Programme d'ordinateur pour synthétiser au moins un signal électromagnétique à large bande ciblé (60), dans lequel le programme d'ordinateur comprend des instructions qui, lorsque le programme est exécuté par un ordinateur, amènent l'appareil selon la revendication 1 à mettre en œuvre le procédé (200) selon la revendication précédente.

# Fig. 1a

# Fig. 1b

Fig. 1c

Fig. 2

Fig. 3

Fig. 4

Fig. 5

Fig. 6

Fig. 7

Fig. 8

# Fig. 9

Fig. 10

Fig. 11a

Fig. 11b

## Fig. 12

## Fig. 13

Fig. 14

Fig. 15

# Fig. 16

# Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GEISLER et al.** Demonstration of a Flexible Bandwidth Optical Transmitter/Receiver System Scalable to Terahertz Bandwidths. *IEEE Photonics Journal*, 2011, vol. 3 (6), 1013-1022
- **GUAN, B. et al.** Optical Spectrally Sliced Transmitter for High Fidelity and Bandwidth Scalable Waveform Generation. *Journal of Lightwave Technology*, 2016, vol. 34 (2), 737-744

- **FENG et al.** Rapidly reconfigurable high-fidelity optical arbitrary waveform generation in heterogeneous photonic integrated circuits. *Optics Express 8884*, 2017, vol. 25 (8)